(19) Europäisches Patentamt
European Patent Office
Office européen des brevets

(11) EP 3 181 571 B1

(12) # EUROPEAN PATENT SPECIFICATION

(45) Date of publication and mention of the grant of the patent:
**24.07.2019 Bulletin 2019/30**

(51) Int Cl.:
***C07F 7/18*** *(2006.01)* ***C08F 36/14*** *(2006.01)*
***C08C 19/25*** *(2006.01)*

(21) Application number: **15200773.8**

(22) Date of filing: **17.12.2015**

(54) **SILICON-CONTAINING AZODICARBOXAMIDES, THEIR PREPARATION AND USE**

SILIZIUM-ENTHALTENDE AZODICARBOXAMIDE, DEREN HERSTELLUNG UND VERWENDUNG

AZODICARBOXAMIDES CONTENANT DU SILICIUM, LEUR PREPARATION ET UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.06.2017 Bulletin 2017/25**

(73) Proprietor: **Evonik Degussa GmbH**
**45128 Essen (DE)**

(72) Inventors:
- **KORTH, Karsten**
  **79639 Grenzach-Wyhlen (DE)**
- **KECK, Julia**
  **68159 Mannheim (DE)**
- **ERHARDT, Sascha**
  **79730 Murg (DE)**
- **MONKIEWICZ, Jaroslaw**
  **79618 Rheinfelden (DE)**
- **SPRINGER, Christian**
  **79618 Rheinfelden (DE)**
- **BAUER, Elisabeth**
  **79585 Steinen (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(56) References cited:
**EP-A1- 2 508 559 EP-A2- 1 683 801**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 181 571 B1

## Description

The invention relates to silicon-containing azodicarboxamides, and to their preparation and use in rubber mixtures.

DE 2704506 discloses compounds of the general formula $Y\text{-}X\text{-}CO\text{-}N{=}N\text{-}CO\text{-}X^1\text{-}Z$ and their use in filler-containing rubber mixtures.

Furthermore, US 20090234066 A1 discloses compounds of the formula A-CO-N=N-CO-Z-G, which are used together with sulphur-containing silanes in rubber mixtures comprising isoprene rubber.

US 20090186961 A1 discloses compounds of the formula A-CO-N=N-CO-Z-G, which are used together with "coating material" in rubber mixtures comprising isoprene rubber.

EP 1683801 discloses mercaptosilanes with alkylpolyether groups.

Furthermore, EP 2508559 discloses rubber mixtures comprising

(A) at least one rubber selected from the group of ethylene-propylene-diene copolymer (EPDM), ethylene-propylene copolymer (EPM), chloroprene rubber (CR), chloropolyethylene (CM), chloroisobutene-isoprene-(chlorobutyl) rubber (CIIR), chlorosulphonyl-polyethylene (CSM), ethylene-vinyl acetate copolymer (EAM), alkyl acrylate copolymer (ACM), polyesterpolyurethane (AU), polyetherpolyurethane (EU), bromoisobutene-isoprene-(bromobutyl) rubber (BIIR), polychlorotrifluoroethylene (CFM), isobutene-isoprene rubber (butyl rubber, IIR), isobutene rubber (IM), thermoplastic polyesterpolyurethane (YAU), thermoplastic polyetherpolyurethane (YEU), silicone rubber with methyl groups on the polymer chain (MQ), hydrogenated acrylonitrile-butadiene rubber (HNBR), acrylonitrile-butadiene rubber (NBR) or carboxylated acrylonitrile-butadiene rubber (XNBR),

(B) at least one oxidic filler and

(C) at least one silicon-containing azodicarbamide of the formula $(R^1)_{3-a}(R^2)_aSi\text{-}R^I\text{-}NH\text{-}C(O)\text{-}N{=}N\text{-}C(O)\text{-}NH\text{-}R^I\text{-}Si(R^1)_{3-a}(R^2)_a$.

EP 2552925 discloses a process for preparing silicon-containing azodicarbamides of the formula

$$(R^1)_{3-a}(R^2)_aSi\text{-}R^I\text{-}NH\text{-}C(O)\text{-}N{=}N\text{-}C(O)\text{-}NH\text{-}R^I\text{-},\ Si(R^1)_{3-a}(R^2)_a$$

by reaction of azobiscarboxy compounds of the formula

$$R^3\text{-}X^1\text{-}C(O)\text{-}N{=}N\text{-}C(O)\text{-}X^1\text{-}R^4$$

with aminosilanes of the formula

$$(R^1)_{3-a}(R^2)_aSi\text{-}R^I\text{-}NH_2.$$

It is an object of the present invention to provide suitable sulphur-free coupling reagents for filler-containing rubber mixtures which exhibit improved modulus 300, delta torque and tear resistance.

Silicon-containing azodicarboxamides may be silicon-containing azodicarboxamides of the general formula I

$$(A^1)_x(A^2)_{(3-x)}Si\text{-}R^1\text{-}N(D^1)\text{-}CO\text{-}N{=}N\text{-}CO\text{-}N(D^1)\text{-}R^1\text{-}\ Si(A^1)_x(A^2)_{(3-x)} \qquad \text{(I)},$$

where $A^1$ is an alkyl polyether group $-O-((CR^I_2)_w-O-)_v-Alk$, preferably $-O-(CH_2-CH_2-O-)_v-Alk$ or $-O-(CH(CH_3)-CH_2-O-)_v-Alk$, where v = 1-60, preferably 2-30, more preferably 2-20, and very preferably 2-15, extremely preferably 3-10, w = 1-20, preferably 2-10, more preferably 2-5, very preferably 2,

$R^I$ independently at each occurrence is H, a phenyl group or an unbranched or branched, preferably a $C_1$-$C_{11}$, more preferably a $CH_3$ or $CH_2-CH_3$, alkyl group,

Alk is a branched or unbranched, saturated or unsaturated, substituted or unsubstituted, aliphatic, aromatic or mixed aliphatic/aromatic monovalent $C_1$-$C_{35}$, preferably $C_2$-$C_{22}$, more preferably $C_3$-$C_{18}$, very preferably $C_5$-$C_{13}$, hydrocarbon group,

$A^2$s are identical or different and are a branched or unbranched alkyl, preferably $C_1$-$C_{18}$, more preferably $CH_3$, $CH_2-CH_3$, $CH(CH_3)-CH_3$, $CH_2-CH_2-CH_3$ or $C_4$-$C_{14}$ alkyl, very preferably $CH_3$,

a branched or unbranched alkoxy, preferably $C_1$-$C_{18}$ alkoxy, more preferably $-OCH_3$, $-OCH_2-CH_3$, $-OCH(CH_3)-CH_3$, $-OCH_2-CH_2-CH_3$, $-OC_{12}H_{25}$, $-OC_{13}H_{27}$, $-OC_{14}H_{29}$ or $C_{15}$-$C_{18}$ alkoxy, very preferably $-OCH_2CH_3$,

a branched or unbranched $C_2$-$C_{25}$, preferably $C_4$-$C_{20}$, more preferably $C_6$-$C_{18}$, alkenyloxy,

a $C_6$-$C_{35}$, preferably $C_9$-$C_{30}$, more preferably phenyloxy ($-OC_6H_5$) or $C_9$-$C_{18}$, aryloxy,

a branched or unbranched $C_7$-$C_{35}$, preferably $C_9$-$C_{30}$, more preferably benzyloxy ($-O-CH_2-C_6H_5$) or $-O-CH_2-CH_2-C_6H_5$, alkylaryloxy group,

a branched or unbranched $C_7$-$C_{35}$, preferably $C_7$-$C_{25}$, more preferably tolyloxy ($-O-C_6H_4-CH_3$) or a $C_9$-$C_{18}$, aralkyloxy group,

or a hydroxyl group (-OH),

$D^1$s are identical or different and are an H or an Alk', preferably a -H or a $-C_4H_9$, where Alk' is a $C_1$-$C_{18}$, preferably $C_1$-$C_{10}$, more preferably $C_1$-$C_5$, very preferably $C_1$-$C_3$, alkyl group, $C_5$-$C_{18}$, preferably $C_6$, cycloalkyl group or $C_6$-$C_{18}$ aryl group, preferably phenyl,

$R^1$s are identical or different and are a branched or unbranched, saturated or unsaturated, aliphatic, aromatic or mixed aliphatic/aromatic divalent $C_1$-$C_{30}$, preferably $C_1$-$C_{20}$, more preferably $C_1$-$C_{15}$, very preferably $C_1$-$C_8$, hydrocarbon group which is optionally substituted by F-, Cl-, Br-, I-, -CN or HS-,

wherein the average polyether fraction x = 1.3 - 1.7, preferably 1.4 - 1.6.

Silicon-containing azodicarboxamides may be mixtures of silicon-containing azodicarboxamides of the general formula I.

Silicon-containing azodicarboxamides of the general formula I may undergo hydrolysis and condensation of the alkoxysilane functions to form siloxane-containing oligomers of silicon-containing azodicarboxamides of the general formula I.

The average polyether fraction x is calculated according to the following equation:

$$x = \left(\frac{100 \times M(SiO_2)}{w\%(SiO_2)} - 262.3\right) \div 374.6$$

where $M(SiO_2)$ is the molar mass of $SiO_2$ (60.08 g/mol), $w\%(SiO_2)$ is the amount of $SiO_2$, determined according to the method below. The above formula is based on the following assumptions:

$$w\%(SiO_2) = 100 \times \left(\frac{M(SiO_2)}{M}\right)$$

The molar mass M is made up as follows:

M = 1011.5 (x-1) + 636.9 (2-x). This 1011.5 is half the average molar mass of the reference compound with x=2 : $[(C_{13}H_{27}(-O-CH_2-CH_2)_5-O-)_{2.0}(EtO)_{1.0}Si-(CH_2)_3-NH-C(=O)-N=]_2$

and 636.9 is half the average molar mass of the reference compound with x=1:

$$[(C_{13}H_{27}(-O-CH_2-CH_2)_5-O-)_{1.0}(EtO)_{2.0}Si-(CH_2)_3-NH-C(=O)-N=]_2.$$

Determination of $w\%(SiO_2)$:

The method describes the gravimetric determination of silicon dioxide by heating with hydrofluoric acid.

Description of the technique:

0.2 g of the sample under analysis is weighed out into a platinum crucible. 10 drops of concentrated sulphuric acid are added, and the crucible is closed with a fitting lid and heated on a hotplate. 1 ml of concentrated nitric acid and 10 drops of 30% hydrogen peroxide are added, and the crucible is again sealed with the lid. Oxidization is carried out in the crucible on a hotplate, the addition of nitric acid and hydrogen peroxide being repeated until the residue in the crucible appears white. The contents of the crucible are evaporated, fumed off and calcined with a Bunsen burner. The calcining operation subsequently takes place at 1000°C in a muffle furnace for 1 hour. The sample is cooled in a desiccator and thereafter weighed.

A few drops of sulphuric acid and up to 5 ml of 40% hydrofluoric acid are added. Evaporation and fuming off are carried out until no further sulphuric acid vapours arise. The step of heating with hydrofluoric acid is repeated. Calcining is carried out initially with the Bunsen burner and subsequently in the muffle furnace at 1000°C for 1 hour. The sample is cooled in a desiccator and weighed.

Calculation of the $SiO_2$ content:

$$w\%(SiO_2) = 100 \times \left(\frac{m_2 - m_1}{E}\right)$$

$m_1$ = mass of the crucible with calcining residue after heating with hydrofluoric acid, in g

$m_2$ = mass of the crucible with calcining residue before heating with hydrofluoric acid, in g

E = initial mass of the sample, in g

Alk may preferably be $-CH_3$, $-CH_2-CH_3$, $-C_3H_7$, $-C_4H_9$,$-C_5H_{11}$, $-C_6H_{13}$, $-C_7H_{15}$, $-C_8H_{17}$, $-C_9H_{19}$, $-C_{10}H_{21}$, $-C_{11}H_{23}$,$-C_{12}H_{25}$, $-C_{13}H_{27}$, $-C_{14}H_{29}$, $-C_{15}H_{31}$, $-C_{16}H_{33}$, $-C_{17}H_{35}$, $-C_{18}H_{37}$ or $-C_{19}H_{39}$.

$R^1$ may preferably be $-CH_2-$, $-CH_2CH_2-$, $-CH_2CH_2CH_2-$,$-CH_2CH_2CH_2CH_2-$, $-CH(CH_3)-$, $-CH_2CH(CH_3)-$, $-CH(CH_3)CH_2-$,$-C(CH_3)_2-$, $-CH(C_2H_5)-$, $-CH_2CH_2CH(CH_3)-$, $-CH(CH_3)CH_2CH_2-$,$-CH_2CH(CH_3)CH_2-$, $-CH_2CH_2CH_2CH_2CH_2-$, $-CH_2CH_2CH_2CH_2CH_2CH_2-$,$-CH_2CH_2CH_2CH_2CH_2CH_2CH_2-$, $-CH_2CH_2CH_2CH_2CH_2CH_2CH_2CH_2-$,$-CH_2CH_2CH_2CH_2CH_2CH_2CH_2CH_2CH_2-$, $-CH_2CH_2CH_2CH_2CH_2CH_2CH_2CH_2CH_2CH_2-$, $-CH_2CH_2CH_2CH_2CH_2CH_2CH_2CH_2CH_2CH_2CH_2-$, $-CH_2CH_2CH_2CH_2CH_2CH_2CH_2CH_2CH_2CH_2CH_2CH_2CH_2-$, $-CH_2CH_2CH_2CH_2CH_2CH_2CH_2CH_2CH_2CH_2CH_2CH_2CH_2CH_2-$, $-CH_2CH_2CH_2CH_2CH_2CH_2CH_2CH_2CH_2CH_2CH_2CH_2CH_2CH_2CH_2CH_2CH_2CH_2-$or

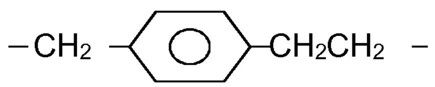

or $-CH_2-CH_2-C_6H_4-CH_2-$.

The group $((CR^I{}_2)_w-O-)$ of the alkyl polyether group of $A^1$ may be ethylene oxide $(CH_2-CH_2-O)$, propylene oxide, for example $(CH(CH_3)-CH_2-O)$ or $(CH_2-CH(CH_3)-O)$, or butylene oxide units, for example $(-CH_2-CH_2-CH_2-CH_2-O)$, $(-CH(CH_2-CH_3)-CH_2-O)$ or $(-CH_2-CH(CH_2-CH_3)-O)$.

The group $-O-((CR^I{}_2)_w-O-)_v$ may preferably be:

$O-(-CH_2-CH_2-O-)_a$,
$O-(-CH(CH_3)-CH_2-O-)_a$,
$O-(-CH_2-CH(CH_3)-O-)_a$,
$O-(-CH_2-CH_2-O-)_a(-CH(CH_3)-CH_2-O-)$,
$O-(-CH_2-CH_2-O-)(-CH(CH_3)-CH_2-O-)_a$,
$O(-CH_2-CH_2-O-)_a(-CH_2-CH(CH_3)-O-)$,
$O(-CH_2-CH_2-O-)(-CH_2-CH(CH_3)-O-)_a$,
$O(-CH(CH_3)-CH_2-O-)_a(-CH_2-CH(CH_3)-O-)$,
$O(-CH(CH_3)-CH_2-O-)(-CH_2-CH(CH_3)-O-)_a$,
$O-(-CH_2-CH_2-O-)_a(-CH(CH_3)-CH_2-O-)_b(-CH_2-CH(CH_3)-O-)_c$ or a combination with one another.

The indices a, b and c are integers and denote the number of repeating units. The indices a, b and c may be

1-20, preferably 1 to 15, more preferably 1-8, very preferably 1 to 5.

The alkyl polyether group $A^1$ with $-O-((CR^I_2)_w-O-)_vAlk$ may be

$O-(CH_2-CH_2O)_2-CH_3$, $O-(CH_2-CH_2O)_3-CH_3$, $O-(CH_2-CH_2O)_4-CH_3$, $O-(CH_2-CH_2O)_5-CH_3$, $O-(CH_2-CH_2O)_6-CH_3$, $O-(CH_2-CH_2O)_7-CH_3$,

$O-(CH(CH_3)-CH_2O)_2-CH_3$, $O-(CH(CH_3)-CH_2O)_3-CH_3$, $O-(CH(CH_3)-CH_2O)_4-CH_3$, $O-(CH(CH_3)-CH_2O)_5-CH_3$, $O-(CH(CH_3)-CH_2O)_6-CH_3$,

$O-(CH_2-CH_2O)_2-CH_2-CH_3$, $O-(CH_2-CH_2O)_3-CH_2-CH_3$, $O-(CH_2-CH_2O)_4-CH_2-CH_3$, $O-(CH_2-CH_2O)_5-CH_2-CH_3$, $O-(CH_2-CH_2O)_6-CH_2-CH_3$, $O-(CH_2-CH_2O)_7-CH_2-CH_3$,

$O-(CH(CH_3)-CH_2O)_2-CH_3$, $O-(CH(CH_3)-CH_2O)_3-CH_3$, $O-(CH(CH_3)-CH_2O)_4-CH_3$, $O-(CH(CH_3)-CH_2O)_5-CH_3$, $O-(CH(CH_3)-CH_2O)_6-CH_3$, $O-(CH_2-CH_2O)_2-C_3H_7$, $O-(CH_2-CH_2O)_3-C_3H_7$, $O-(CH_2-CH_2O)_4-C_3H_7$, $O-(CH_2-CH_2O)_5-C_3H_7$, $O-(CH_2-CH_2O)_6-C_3H_7$, $O-(CH_2-CH_2O)_7-C_3H_7$,

$O-(CH(CH_3)-CH_2O)_2-C_3H_7$, $O-(CH(CH_3)-CH_2O)_3-C_3H_7$, $O-(CH(CH_3)-CH_2O)_4-C_3H_7$, $O-(CH(CH_3)-CH_2O)_5-C_3H_7$, $O-(CH(CH_3)-CH_2O)_6-C_3H_7$,

$O-(CH_2-CH_2O)_2-C_4H_9$, $O-(CH_2-CH_2O)_3-C_4H_9$, $O-(CH_2-CH_2O)_4-C_4H_9$, $O-(CH_2-CH_2O)_5-C_4H_9$, $O-(CH_2-CH_2O)_6-C_4H_9$, $O-(CH_2-CH_2O)_7-C_4H_9$,

$O-(CH(CH_3)-CH_2O)_2-C_4H_9$, $O-(CH(CH_3)-CH_2O)_3-C_4H_9$, $O-(CH(CH_3)-CH_2O)_4-C_4H_9$, $O-(CH(CH_3)-CH_2O)_5-C_4H_9$, $O-(CH(CH_3)-CH_2O)_6-C_4H_9$,

$O-((CH_2-CH_2O)_2-C_5H_{11}$, $O-(CH_2-CH_2O)_3-C_5H_{11}$, $O-(CH_2-CH_2O)_4-C_5H_{11}$, $O-(CH_2-CH_2O)_5-C_5H_{11}$, $O-(CH_2-CH_2O)_6-C_5H_{11}$, $O-(CH_2-CH_2O)_7-C_5H_{11}$,

$O-(CH(CH_3)-CH_2O)_2-C_5H_{11}$, $O-(CH(CH_3)-CH_2O)_3-C_5H_{11}$, $O-(CH(CH_3)-CH_2O)_4-C_5H_{11}$, $O-(CH(CH_3)-CH_2O)_5-C_5H_{11}$, $O-(CH(CH_3)-CH_2O)_6-C_5H_{11}$,

$O-(CH_2-CH_2O)_2-C_6H_{13}$, $O-(CH_2-CH_2O)_3-C_6H_{13}$, $O-(CH_2-CH_2O)_4-C_6H_{13}$, $O-(CH_2-CH_2O)_5-C_6H_{13}$, $O-(CH_2-CH_2O)_6-C_6H_{13}$, $O-(CH_2-CH_2O)_7-C_6H_{13}$,

$O-(CH(CH_3)-CH_2O)_2-C_6H_{13}$, $O-(CH(CH_3)-CH_2O)_3-C_6H_{13}$, $O-(CH(CH_3)-CH_2O)_4-C_6H_{13}$, $O-(CH(CH_3)-CH_2O)_5-C_6H_{13}$, $O-(CH(CH_3)-CH_2O)_6-C_6H_{13}$,

$O-(CH_2-CH_2O)_2-C_7H_{15}$, $O-(CH_2-CH_2O)_3-C_7H_{15}$, $O-(CH_2-CH_2O)_4-C_7H_{15}$, $O-(CH_2-CH_2O)_5-C_7H_{15}$, $O-(CH_2-CH_2O)_6-C_7H_{15}$, $O-(CH_2-CH_2O)_7-C_7H_{15}$,

$O-(CH(CH_3)-CH_2O)_2-C_7H_{15}$, $O-(CH(CH_3)-CH_2O)_3-C_7H_{15}$, $O-(CH(CH_3)-CH_2O)_4-C_7H_{15}$, $O-(CH(CH_3)-CH_2O)_5-C_7H_{15}$, $O-(CH(CH_3)-CH_2O)_6-C_7H_{15}$,

$O-(CH_2-CH_2O)_2-C_8H_{17}$, $O-(CH_2-CH_2O)_3-C_8H_{17}$, $O-(CH_2-CH_2O)_4-C_8H_{17}$, $O-(CH_2-CH_2O)_5-C_8H_{17}$, $O-(CH_2-CH_2O)_6-C_8H_{17}$, $O-(CH_2-CH_2O)_7-C_8H_{17}$,

$O-(CH(CH_3)-CH_2O)_2-C_8H_{17}$, $O-(CH(CH_3)-CH_2O)_3-C_8H_{17}$, $O-(CH(CH_3)-CH_2O)_4-C_8H_{17}$, $O-(CH(CH_3)-CH_2O)_5-C_8H_{17}$, $O-(CH(CH_3)-CH_2O)_6-C_8H_{17}$,

$O-(CH_2-CH_2O)_2-C_9H_{19}$, $O-(CH_2-CH_2O)_3-C_9H_{19}$, $O-(CH_2-CH_2O)_4-C_9H_{19}$, $O-(CH_2-CH_2O)_5-C_9H_{19}$, $O-(CH_2-CH_2O)_6-C_9H_{19}$, $O-(CH_2-CH_2O)_7-C_9H_{19}$,

$O-(CH(CH_3)-CH_2O)_2-C_9H_{19}$, $O-(CH(CH_3)-CH_2O)_3-C_9H_{19}$, $O-(CH(CH_3)-CH_2O)_4-C_9H_{19}$, $O-(CH(CH_3)-CH_2O)_5-C_9H_{19}$, $O-(CH(CH_3)-CH_2O)_6-C_9H_{19}$,

$O-(CH_2-CH_2O)_2-C_{10}H_{21}$, $O-(CH_2-CH_2O)_3-C_{10}H_{21}$, $O-(CH_2-CH_2O)_4-C_{10}H_{21}$, $O-(CH_2-CH_2O)_5-C_{10}H_{21}$, $O-(CH_2-CH_2O)_6-C_{10}H_{21}$, $O-(CH_2-CH_2O)_7-C_{10}H_{21}$,

$O-(CH(CH_3)-CH_2O)_2-C_{10}H_{21}$, $O-(CH(CH_3)-CH_2O)_3-C_{10}H_{21}$, $O-(CH(CH_3)-CH_2O)_4-C_{10}H_{21}$, $O-(CH(CH_3)-CH_2O)_5-C_{10}H_{21}$, $O-(CH(CH_3)-CH_2O)_6-C_{10}H_{21}$,

$O-(CH_2-CH_2O)_2-C_{11}H_{23}$, $O-(CH_2-CH_2O)_3-C_{11}H_{23}$, $O-(CH_2-CH_2O)_4-C_{11}H_{23}$, $O-(CH_2-CH_2O)_5-C_{11}H_{23}$, $O-(CH_2-CH_2O)_6-C_{11}H_{23}$, $O-(CH_2-CH_2O)_7-C_{11}H_{23}$,

$O-(CH(CH_3)-CH_2O)_2-C_{11}H_{23}$, $O-(CH(CH_3)-CH_2O)_3-C_{11}H_{23}$, $O-(CH(CH_3)-CH_2O)_4-C_{11}H_{23}$, $O-(CH(CH_3)-CH_2O)_5-C_{11}H_{23}$, $O-(CH(CH_3)-CH_2O)_6-C_{11}H_{23}$,

$O-(CH_2-CH_2O)_2-C_{12}H_{25}$, $O-(CH_2-CH_2O)_3-C_{12}H_{25}$, $O-(CH_2-CH_2O)_4-C_{12}H_{25}$, $O-(CH_2-CH_2O)_5-C_{12}H_{25}$, $O-(CH_2-CH_2O)_6-C_{12}H_{25}$, $O-(CH_2-CH_2O)_7-C_{12}H_{25}$,

$O-(CH(CH_3)-CH_2O)_2-C_{12}H_{25}$, $O-(CH(CH_3)-CH_2O)_3-C_{12}H_{25}$, $O-(CH(CH_3)-CH_2O)_4-C_{12}H_{25}$, $O-(CH(CH_3)-CH_2O)_5-C_{12}H_{25}$,

$O-(CH_2-CH_2O)_2-C_{13}H_{27}$, $O-(CH_2-CH_2O)_3-C_{13}H_{27}$, $O-(CH_2-CH_2O)_4-C_{13}H_{27}$, $O-(CH_2-CH_2O)_5-C_{13}H_{27}$, $O-(CH_2-CH_2O)_6-C_{13}H_{27}$, $O-(CH_2-CH_2O)_7-C_{13}H_{27}$,

$O-(CH(CH_3)-CH_2O)_2-C_{13}H_{27}$, $O-(CH(CH_3)-CH_2O)_3-C_{13}H_{27}$, $O-(CH(CH_3)-CH_2O)_4-C_{13}H_{27}$, $O-(CH(CH_3)-CH_2O)_5-C_{13}H_{27}$,

$O-(CH_2-CH_2O)_2-C_{14}H_{29}$, $O-(CH_2-CH_2O)_3-C_{14}H_{29}$, $O-(CH_2-CH_2O)_4-C_{14}H_{29}$, $O-(CH_2-CH_2O)_5-C_{14}H_{29}$, $O-(CH_2-CH_2O)_6-C_{14}H_{29}$, $O-(CH_2-CH_2O)_7-C_{14}H_{29}$,

$O-(CH(CH_3)-CH_2O)_2-C_{14}H_{29}$, $O-(CH(CH_3)-CH_2O)_3-C_{14}H_{29}$, $O-(CH(CH_3)-CH_2O)_4-C_{14}H_{29}$, $O-(CH(CH_3)-CH_2O)_5-C_{14}H_{29}$,

$O-(CH_2-CH_2O)_2-C_{15}H_{31}$, $O-(CH_2-CH_2O)_3-C_{15}H_{31}$, $O-(CH_2-CH_2O)_4-C_{15}H_{31}$, $O-(CH_2-CH_2O)_5-C_{15}H_{31}$, $O-(CH_2-CH_2O)_6-C_{15}H_{31}$, $O-(CH_2-CH_2O)_7-C_{15}H_{31}$,

$O-(CH(CH_3)-CH_2O)_2-C_{15}H_{31}$, $O-(CH(CH_3)-CH_2O)_3-C_{15}H_{31}$, $O-(CH(CH_3)-CH_2O)_4-C_{15}H_{31}$,

$O-(CH_2-CH_2O)_2-C_{16}H_{33}$, $O-(CH_2-CH_2O)_3-C_{16}H_{33}$, $O-(CH_2-CH_2O)_4-C_{16}H_{33}$, $O-(CH_2-CH_2O)_5-C_{16}H_{33}$, $O-(CH_2-CH_2O)_6-C_{16}H_{33}$,

$O-(CH(CH_3)-CH_2O)_2-C_{16}H_{33}$, $O-(CH(CH_3)-CH_2O)_3-C_{16}H_{33}$, $O-(CH(CH_3)-CH_2O)_4-C_{16}H_{33}$,

$O-(CH_2-CH_2O)_2-C_{17}H_{35}$, $O-(CH_2-CH_2O)_3-C_{17}H_{35}$, $O-(CH_2-CH_2O)_4-C_{17}H_{35}$, $O-(CH_2-CH_2O)_5-C_{17}H_{35}$, $O-(CH_2-CH_2O)_6-C_{17}H_{35}$,

$O-(CH(CH_3)-CH_2O)_2-C_{17}H_{35}$, $O-(CH(CH_3)-CH_2O)_3-C_{17}H_{35}$, $O-(CH(CH_3)-CH_2O)_4-C_{17}H_{35}$, $O-(CH(CH_3)-CH_2O)_5-C_{17}H_{35}$,

$O-(CH_2-CH_2O)_2-C_{18}H_{37}$, $O-(CH_2-CH_2O)_3-C_{18}H_{37}$, $O-(CH_2-CH_2O)_4-C_{18}H_{37}$, $O-(CH_2-CH_2O)_5-C_{18}H_{37}$, $C_{18}H_{37}$, $O-(CH_2-CH_2O)_6-C_{18}H_{37}$,

$O-(CH(CH_3)-CH_2O)_2-C_{18}H_{37}$, $O-(CH(CH_3)-CH_2O)_3-C_{18}H_{37}$, $O-(CH(CH_3)-CH_2O)_4-C_{18}H_{37}$, $O-(CH(CH_3)-CH_2O)_5-C_{18}H_{37}$,

$O-(CH_2-CH_2O)_2-C_6H_4-C_9H_{19}$, $O-(CH_2-CH_2O)_3-C_6H_4-C_9H_{19}$, $O-(CH_2-CH_2O)_4-C_6H_4-C_9H_{19}$, $O-(CH_2-CH_2O)_5-C_6H_4-C_9H_{19}$, $O-(CH_2-CH_2O)_6-C_6H_4-C_9H_{19}$, $O-(CH_2-CH_2O)_7-C_6H_4-C_9H_{19}$,

$O-(CH(CH_3)-CH_2O)_2-C_6H_4-C_9H_{19}$, $O-(CH(CH_3)-CH_2O)_3-C_6H_4-C_9H_{19}$ or $O-(CH(CH_3)-CH_2O)_4-C_6H_4-C_9H_{19}$.

The alkyl polyether group $A^1$ with $-O-((CR^I_2)_w-O-)_v$Alk may, for v = 5, $R^I$ = H and Alk = $C_{13}H_{27}$, be

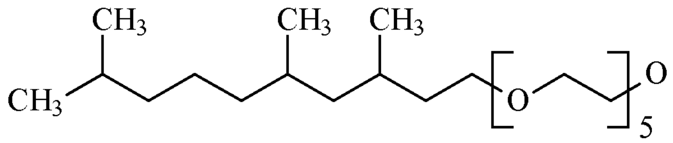

,

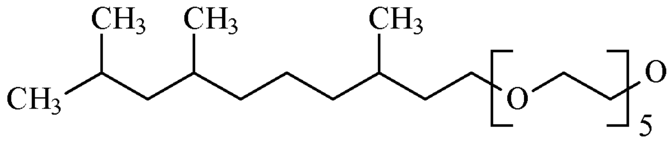

or

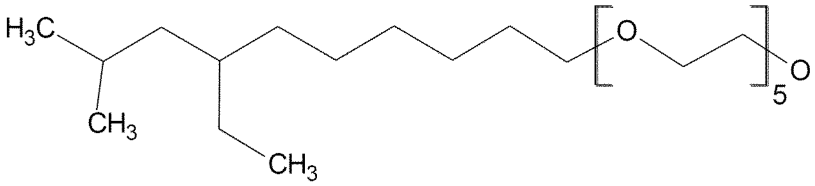

.

The average branching number of the carbon chain Alk may be 1 to 5, preferably 1, 2, 3 or 4. The average branching number here is defined as (the number of $CH_3$ groups)-1.

Compounds of the general formula I where $A^1$ is an alkyl polyether group $-O-((CR^I_2)_w-O-)_vAlk$, preferably $-O-(CH_2-CH_2-O-)_vAlk$, may be as follows for v = 1 to 40, preferably v = 1 to 30, more preferably v = 1 to 15:

$[(C_{11}H_{23}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{11}H_{23}]_x$,

$[(C_{12}H_{25}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{12}H_{25}]_x$,

$[(C_{13}H_{27}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{13}H_{27}]_x$,

$[(C_{14}H_{29}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{14}H_{29}]_x$,

$[(C_{15}H_{31}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{15}H_{31}]_x$,

$[(C_{16}H_{33}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{16}H_{33}]_x$,

$[(C_{17}H_{35}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{17}H_{35}]_x$,

$[(C_{18}H_{37}O-(CH_2-CH_2O)_v]_x(EtO)_{(3-x)}Si-CH_2-NH-CO-N=N-CO-NH-CH_2-Si(OEt)_{(3-x)}[O-(CH_2-CH_2O)_v-C_{18}H_{37}]_x$,

$[(C_{11}H_{23}O-(CH_2-CH_2O)_v]_x(EtO)_{(3-x)}Si-CH_2-CH_2-NH-CO-N=N-CO-NH-CH_2-CH_2-Si(OEt)_{(3-x)}[O-(CH_2-CH_2O)_v-C_{11}H_{23}]_x$,

$[(C_{12}H_{25}O-(CH_2-CH_2O)_v]_x(EtO)_{(3-x)}Si-CH_2-CH_2-NH-CO-N=N-CO-NH-CH_2-CH_2-Si(OEt)_{(3-x)}[O-(CH_2-CH_2O)_v-C_{12}H_{25}]_x$,

$[(C_{13}H_{27}O-(CH_2-CH_2O)_v]_x(EtO)_{(3-x)}Si-CH_2-CH_2-NH-CO-N=N-CO-NH-CH_2-CH_2-Si(OEt)_{(3-x)}[O-(CH_2-CH_2O)_v-C_{13}H_{27}]_x$,

$[(C_{14}H_{29}O-(CH_2-CH_2O)_v]_x(EtO)_{(3-x)}Si-CH_2-CH_2-NH-CO-N=N-CO-NH-CH_2-CH_2-Si(OEt)_{(3-x)}[O-(CH_2-CH_2O)_v-C_{14}H_{29}]_x$,

$[(C_{15}H_{31}O-(CH_2-CH_2O)_v]_x(EtO)_{(3-x)}Si-CH_2-CH_2-NH-CO-N=N-CO-NH-$

$CH_2$-$CH_2$-Si(OEt)$_{(3-x)}$[O-($CH_2$-$CH_2$O)$_v$-$C_{15}H_{31}$]$_x$,

[($C_{16}H_{33}$O-($CH_2$-$CH_2$O)$_v$]$_x$(EtO)$_{(3-x)}$Si-$CH_2$-$CH_2$-NH-CO-N=N-CO-NH-$CH_2$-$CH_2$-Si(OEt)$_{(3-x)}$[O-($CH_2$-$CH_2$O)$_v$-$C_{16}H_{33}$]$_x$,

[($C_{17}H_{35}$O-($CH_2$-$CH_2$O)$_v$]$_x$(EtO)$_{(3-x)}$Si-$CH_2$-$CH_2$-NH-CO-N=N-CO-NH-$CH_2$-$CH_2$-Si(OEt)$_{(3-x)}$[O-($CH_2$-$CH_2$O)$_v$-$C_{17}H_{35}$]$_x$,

[($C_{18}H_{37}$O-($CH_2$-$CH_2$O)$_v$]$_x$(EtO)$_{(3-x)}$Si-$CH_2$-$CH_2$-NH-CO-N=N-CO-NH-$CH_2$-$CH_2$-Si(OEt)$_{(3-x)}$[O-($CH_2$-$CH_2$O)$_v$-$C_{18}H_{37}$]$_x$,

[($C_{11}H_{23}$O-($CH_2$-$CH_2$O)$_v$]x(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{11}H_{23}$]$_x$ ,

[($C_{12}H_{25}$O-($CH_2$-$CH_2$O)$_v$]$_x$(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{12}H_{25}$]$_x$ ,

[($C_{13}H_{27}$O-($CH_2$-$CH_2$O)$_v$]$_x$(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{13}H_{27}$]$_x$,

[($C_{14}H_{29}$O-($CH_2$-$CH_2$O)$_v$]$_x$(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{14}H_{29}$]$_x$,

[($C_{15}H_{31}$O-($CH_2$-$CH_2$O)$_v$]$_x$(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{15}H_{31}$]$_x$,

[($C_{16}H_{33}$O-($CH_2$-$CH_2$O)$_v$]$_x$(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{16}H_{33}$]$_x$,

[($C_{17}H_{35}$O-($CH_2$-$CH_2$O)$_v$]$_x$(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{17}H_{35}$]$_x$,

[($C_{18}H_{37}$O-($CH_2$-$CH_2$O)$_v$]$_x$(EtO)$_{(3-x)}$Si-$CH_2$-$CH_2$-$CH_2$-NH-CO-N=N-CO-NH-$CH_2$-$CH_2$-$CH_2$-Si(OEt)$_{(3-x)}$[O-($CH_2$-$CH_2$O)$_v$-$C_{18}H_{37}$]$_x$,

[($C_{11}H_{23}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{11}H_{23}$]$_x$,

[($C_{12}H_{25}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{12}H_{25}$]$_x$,

[($C_{13}H_{27}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{13}H_{27}$]$_x$,

[($C_{14}H_{29}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{14}H_{29}$]$_x$,

[($C_{15}H_{31}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{15}H_{31}$]$_x$,

[($C_{16}H_{33}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{16}H_{33}$]$_x$,

[($C_{17}H_{35}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{17}H_{35}$]$_x$,

[($C_{18}H_{37}$O-($CH_2$-$CH_2$O)$_v$]$_x$($CH_3$)$_{(3-x)}$Si-$CH_2$-NH-CO-N=N-CO-NH-$CH_2$-Si($CH_3$)$_{(3-x)}$[O-($CH_2$-$CH_2$O)$_v$-$C_{18}H_{37}$]$_x$,

[($C_{11}H_{23}$O-($CH_2$-$CH_2$O)$_v$]$_x$($CH_3$)$_{(3-x)}$Si-$CH_2$-$CH_2$-$CH_2$-NH-CO-N=N-CO-NH-$CH_2$-$CH_2$-$CH_2$-Si($CH_3$)$_{(3-x)}$[O-($CH_2$-$CH_2$O)$_v$-$C_{11}H_{23}$]$_x$,

[($C_{12}H_{25}$O-($CH_2$-$CH_2$O)$_v$]$_x$($CH_3$)$_{(3-x)}$Si-$CH_2$-$CH_2$-$CH_2$-NH-CO-N=N-CO-NH-$CH_2$-$CH_2$-$CH_2$-Si($CH_3$)$_{(3-x)}$[O-($CH_2$-$CH_2$O)$_v$-$C_{12}H_{25}$]$_x$,

[($C_{13}H_{27}$O-($CH_2$-$CH_2$O)$_v$]$_x$($CH_3$)$_{(3-x)}$Si-$CH_2$-$CH_2$-$CH_2$-NH-CO-N=N-CO-NH-

$CH_2$-$CH_2$-$CH_2$-Si$(CH_3)_{(3-x)}$[O-($CH_2$-$CH_2$O)$_v$-$C_{13}H_{27}$]$_x$,

[($C_{14}H_{29}$O-($CH_2$-$CH_2$O)$_v$]$_x$$(CH_3)_{(3-x)}$Si-$CH_2$-$CH_2$-$CH_2$-NH-CO-N=N-CO-NH-$CH_2$-$CH_2$-$CH_2$-Si$(CH_3)_{(3-x)}$[O-($CH_2$-$CH_2$O)$_v$-$C_{14}H_{29}$]$_x$,

[($C_{15}H_{31}$O-($CH_2$-$CH_2$O)$_v$]$_x$$(CH_3)_{(3-x)}$Si-$CH_2$-$CH_2$-$CH_2$-NH-CO-N=N-CO-NH-$CH_2$-$CH_2$-$CH_2$-Si$(CH_3)_{(3-x)}$[O-($CH_2$-$CH_2$O)$_v$-$C_{15}H_{31}$]$_x$,

[($C_{16}H_{33}$O-($CH_2$-$CH_2$O)$_v$]$_x$$(CH_3)_{(3-x)}$Si-$CH_2$-$CH_2$-$CH_2$-NH-CO-N=N-CO-NH-$CH_2$-$CH_2$-$CH_2$-Si$(CH_3)_{(3-x)}$[O-($CH_2$-$CH_2$O)$_v$-$C_{16}H_{33}$]$_x$,

[($C_{17}H_{35}$O-($CH_2$-$CH_2$O)$_v$]$_x$$(CH_3)_{(3-x)}$Si-$CH_2$-$CH_2$-$CH_2$-NH-CO-N=N-CO-NH-$CH_2$-$CH_2$-$CH_2$-Si$(CH_3)_{(3-x)}$[O-($CH_2$-$CH_2$O)$_v$-$C_{17}H_{35}$]$_x$,

[($C_{18}H_{37}$O-($CH_2$-$CH_2$O)$_v$]$_x$$(CH_3)_{(3-x)}$Si-$CH_2$-$CH_2$-$CH_2$-NH-CO-N=N-CO-NH-$CH_2$-$CH_2$-$CH_2$-Si$(CH_3)_{(3-x)}$[O-($CH_2$-$CH_2$O)$_v$-$C_{18}H_{37}$]$_x$.

In preferred silicon-containing azodicarboxamides of the general formula I, the group $A^1$ may be -O-(($CH_2$)$_w$-O-)$_5$$C_{13}H_{27}$.

The invention provides silicon-containing azodicarboxamides of the formula [($C_{13}H_{27}$(-O-$CH_2$-$CH_2$)$_5$-O-)$_{1.5}$(EtO)$_{1.5}$Si-($CH_2$)$_3$-NH-C(=O)-N=]$_2$, [($C_{13}H_{27}$(-O-$CH_2$-$CH_2$)$_5$-O-)$_{1.3}$(EtO)$_{1.7}$Si-($CH_2$)$_3$-NH-C(=O)-N=]$_2$, [($C_{13}H_{27}$(-O-$CH_2$-$CH_2$)$_5$-O-)$_{1.4}$(EtO)$_{1.6}$Si-($CH_2$)$_3$-NH-C(=O)-N=]$_2$, [($C_{13}H_{27}$(-O-$CH_2$-$CH_2$)$_5$-O-)$_{1.7}$(EtO)$_{1.3}$Si-($CH_2$)$_3$-NH-C(=O)-N=]$_2$ or [($C_{13}H_{27}$(-O-$CH_2$-$CH_2$)$_5$-O-)$_{1.6}$(EtO)$_{1.4}$Si-($CH_2$)$_3$-NH-C(=O)-N=]$_2$.

The silicon-containing azodicarboxamides of the general formula I

$$(A^1)_x(A^2)_{(3-x)}Si\text{-}R^1\text{-}N(D^1)\text{-}CO\text{-}N{=}N\text{-}CO\text{-}N(D^1)\text{-}R^1\text{-}Si(A^1)_x(A^2)_{(3-x)} \quad (I),$$

may be prepared in that azodicarboxy compounds of the general formula II

$$Sub^1\text{-}X^1\text{-}C(O)\text{-}N{=}N\text{-}C(O)\text{-}X^2\text{-}Sub^2 \quad (II)$$

are reacted with aminosilanes of the general formula III

$$(A^1)_x(A^2)_{(3-x)}Si\text{-}R^1\text{-}N(D^1)H \quad (III)$$

where x, $A^1$, $A^2$, $R^1$ and $D^1$ have the definitions stated above and

$Sub^1$ and $Sub^2$ are identical or different and are an H, a $C_1$-$C_{18}$, preferably $C_3$-$C_{12}$, branched or unbranched alkyl, preferably ethyl, propyl or isopropyl, a benzyl (-$CH_2$-$C_6H_5$) or an alkyl polyether ($CH_2$-$CH_2$-O)$_n$-Alk' or (CH($CH_3$)-$CH_2$-O)$_n$-Alk' where n is 1 to 10, preferably 1 to 8, more preferably 1 to 5 and very preferably 1 to 3, and Alk' has the definition stated above,

$X^1$ and $X^2$ are identical or different and are an O or NH.

The azodicarboxy compound of the general formula II used as reactant may be a mixture of azodicarboxy compounds of the general formula II.

The aminosilane of the general formula III used as reactant may be a mixture of aminosilanes of the general formula III.

Aminosilanes of the general formula III may undergo hydrolysis and condensation of the alkoxysilane functions to form siloxane-containing oligomers of the aminosilanes of the general formula III.

The aminosilane of the general formula III may be prepared by transesterifying the aminosilane $(A^2)_3$Si-$R^1$-N($D^1$)H with an alkyl polyether $A^1$-H in the desired molar ratio.

Compounds of the general formula II may preferably be:

alkyl-HN-CO-N=N-CO-NH-alkyl, for example methyl-HN-CO-N=N-CO-NH-methyl,
ethyl-HN-CO-N=N-CO-NH-ethyl,
n-propyl-HN-CO-N=N-CO-NH-n-propyl,

isopropyl-HN-CO-N=N-CO-NH-isopropyl,
n-butyl-HN-CO-N=N-CO-NH-n-butyl,
sec-butyl-HN-CO-N=N-CO-NH-sec-butyl,
tert-butyl-HN-CO-N=N-CO-NH-tert-butyl,
benzyl-HN-CO-N=N-CO-NH-benzyl or phenyl-HN-CO-N=N-CO-NH-phenyl.

Compounds of the general formula II of the basic form alkyl-O-C(O)-N=N-C(O)-O-alkyl may preferably be:

ethyl-O-C(O)-N=N-C(O)-O-ethyl,
propyl-O-C(O)-N=N-C(O)-O-propyl,
isopropyl-O-C(O)-N=N-C(O)-O-isopropyl,
n-butyl-O-C(O)-N=N-C(O)-O-n-butyl,
tert-butyl-O-C(O)-N=N-C(O)-O-tert-butyl,
sec-butyl-O-C(O)-N=N-C(O)-O-sec-butyl,
cyclohexyl-O-C(O)-N=N-C(O)-O-cyclohexyl or benzyl-O-C(O)-N=N-C(O)-O-benzyl.

Compounds of the general formula II of the basic structure Alk'-$(O-CH_2-CH_2)_n$-O-C(O)-N=N-C(O)-O-$(CH_2-CH_2-O)_n$-Alk', where n = 1-10, may preferably be:

methyl- $(O-CH_2-CH_2)_n$-O-C(O)-N=N-C(O)-O-$(CH_2-CH_2-O)_n$-methyl,
ethyl- $(O-CH_2-CH_2)_n$-O-C(O)-N=N-C(O)-O-$(CH_2-CH_2-O)_n$-ethyl,
propyl- $(O-CH_2-CH_2)_n$-O-C(O)-N=N-C(O)-O-$(CH_2-CH_2-O)_n$-propyl,
isopropyl- $(O-CH_2-CH_2)_n$-O-C(O)-N=N-C(O)-O-$(CH_2-CH_2-O)_n$-isopropyl,
n-butyl-$(O-CH_2-CH_2)_n$-O-C(O)-N=N-C(O)-O-$(CH_2-CH_2-O)_n$-n-butyl,
tert-butyl- $(O-CH_2-CH_2)_n$-O-C(O)-N=N-C(O)-O-$(CH_2-CH_2-O)_n$-tert-butyl,
sec-butyl-$(O-CH_2-CH_2)_n$-O-C(O)-N=N-C(O)-O-$(CH_2-CH_2-O)_n$-sec-butyl,
cyclohexyl-$(O-CH_2-CH_2)_n$-O-C(O)-N=N-C(O)-O-$(CH_2-CH_2-O)_n$-cyclohexyl or
benzyl- $(O-CH_2-CH_2)_n$-O-C(O)-N=N-C(O)-O-$(CH_2-CH_2-O)_n$-benzyl.

Compounds of the general formula III may be as follows with v = 1 to 40, preferably v = 1 to 30, more preferably v = 1 to 15:

$[(C_{11}H_{23}O-(CH_2-CH_2O)_v]_x(EtO)_{(3-x)}Si-CH_2-NH_2$,
$[(C_{12}H_{25}O-(CH_2-CH_2O)_v]_x(EtO)_{(3-x)}Si-CH_2-NH_2$,
$[(C_{13}H_{27}O-(CH_2-CH_2O)_v]_x(EtO)_{(3-x)}Si-CH_2-NH_2$,
$[(C_{14}H_{29}O-(CH_2-CH_2O)_v]_x(EtO)_{(3-x)}Si-CH_2-NH_2$,
$[(C_{15}H_{31}O-(CH_2-CH_2O)_v]_x(EtO)_{(3-x)}Si-CH_2-NH_2$,
$[(C_{16}H_{33}O-(CH_2-CH_2O)_v]_x(EtO)_{(3-x)}Si-CH_2-NH_2$,
$[(C_{17}H_{35}O-(CH_2-CH_2O)_v]_x(EtO)_{(3-x)}Si-CH_2-NH_2$,
$[(C_{18}H_{37}O-(CH_2-CH_2O)_v]_x(EtO)_{(3-x)}Si-CH_2-NH_2$,
$[(C_{11}H_{23}O-(CH_2-CH_2O)_v]_x(EtO)_{(3-x)}Si-CH_2-CH_2-NH_2$,
$[(C_{12}H_{25}O-(CH_2-CH_2O)_v]_x(EtO)_{(3-x)}Si-CH_2-CH_2-NH_2$,
$[(C_{13}H_{27}O-(CH_2-CH_2O)_v]_x(EtO)_{(3-x)}Si-CH_2-CH_2-NH_2$,
$[(C_{14}H_{29}O-(CH_2-CH_2O)_v]_x(EtO)_{(3-x)}Si-CH_2-CH_2-NH_2$,
$[(C_{15}H_{31}O-(CH_2-CH_2O)_v]_x(EtO)_{(3-x)}Si-CH_2-CH_2-NH_2$,
$[(C_{16}H_{33}O-(CH_2-CH_2O)_v]_x(EtO)_{(3-x)}Si-CH_2-CH_2-NH_2$,
$[(C_{17}H_{35}O-(CH_2-CH_2O)_v]_x(EtO)_{(3-x)}Si-CH_2-CH_2-NH_2$,
$[(C_{18}H_{37}O-(CH_2-CH_2O)_v]_x(EtO)_{(3-x)}Si-CH_2-CH_2-NH_2$,
$[(C_{11}H_{23}O-(CH_2-CH_2O)_v]_x(EtO)_{(3-x)}Si-CH_2-CH_2-CH_2-NH_2$,
$[(C_{12}H_{25}O-(CH_2-CH_2O)_v]_x(EtO)_{(3-x)}Si-CH_2-CH_2-CH_2-NH_2$,
$[(C_{13}H_{27}O-(CH_2-CH_2O)_v]_x(EtO)_{(3-x)}Si-CH_2-CH_2-CH_2-NH_2$,
$[(C_{14}H_{29}O-(CH_2-CH_2O)_v]_x(EtO)_{(3-x)}Si-CH_2-CH_2-CH_2-NH_2$,
$[(C_{15}H_{31}O-(CH_2-CH_2O)_v]_x(EtO)_{(3-x)}Si-CH_2-CH_2-CH_2-NH_2$,
$[(C_{16}H_{33}O-(CH_2-CH_2O)_v]_x(EtO)_{(3-x)}Si-CH_2-CH_2-CH_2-NH_2$,
$[(C_{17}H_{35}O-(CH_2-CH_2O)_v]_x(EtO)_{(3-x)}Si-CH_2-CH_2-CH_2-NH_2$,
$[(C_{18}H_{37}O-(CH_2-CH_2O)_v]_x(EtO)_{(3-x)}Si-CH_2-CH_2-CH_2-NH_2$,
$[(C_{11}H_{23}O-(CH_2-CH_2O)_v]_x(CH_3)_{(3-x)}Si-CH_2-NH_2$,
$[(C_{12}H_{25}O-(CH_2-CH_2O)_v]_x(CH_3)_{(3-x)}Si-CH_2-NH_2$,

$[(C_{13}H_{27}O\text{-}(CH_2\text{-}CH_2O)_v]_x(CH_3)_{(3-x)}Si\text{-}CH_2\text{-}NH_2$,
$[(C_{14}H_{29}O\text{-}(CH_2\text{-}CH_2O)_v]_x(CH_3)_{(3-x)}Si\text{-}CH_2\text{-}NH_2$,
$[(C_{15}H_{31}O\text{-}(CH_2\text{-}CH_2O)_v]_x(CH_3)_{(3-x)}Si\text{-}CH_2\text{-}NH_2$,
$[(C_{16}H_{33}O\text{-}(CH_2\text{-}CH_2O)_v]_x(CH_3)_{(3-x)}Si\text{-}CH_2\text{-}NH_2$,
$[(C_{17}H_{35}O\text{-}(CH_2\text{-}CH_2O)_v]_x(CH_3)_{(3-x)}Si\text{-}CH_2\text{-}NH_2$,
$[(C_{18}H_{37}O\text{-}(CH_2\text{-}CH_2O)_v]_x(CH_3)_{(3-x)}Si\text{-}CH_2\text{-}NH_2$,
$[(C_{11}H_{23}O\text{-}(CH_2\text{-}CH_2O)_v]_x(CH_3)_{(3-x)}Si\text{-}CH_2\text{-}CH_2\text{-}CH_2\text{-}NH_2$,
$[(C_{12}H_{25}O\text{-}(CH_2\text{-}CH_2O)_v]_x(CH_3)_{(3-x)}Si\text{-}CH_2\text{-}CH_2\text{-}CH_2\text{-}NH_2$,
$[(C_{13}H_{27}O\text{-}(CH_2\text{-}CH_2O)_v]_x(CH_3)_{(3-x)}Si\text{-}CH_2\text{-}CH_2\text{-}CH_2\text{-}NH_2$,
$[(C_{14}H_{29}O\text{-}(CH_2\text{-}CH_2O)_v]_x(CH_3)_{(3-x)}Si\text{-}CH_2\text{-}CH_2\text{-}CH_2\text{-}NH_2$,
$[(C_{15}H_{31}O\text{-}(CH_2\text{-}CH_2O)_v]_x(CH_3)_{(3-x)}Si\text{-}CH_2\text{-}CH_2\text{-}CH_2\text{-}NH_2$,
$[(C_{16}H_{33}O\text{-}(CH_2\text{-}CH_2O)_v]_x(CH_3)_{(3-x)}Si\text{-}CH_2\text{-}CH_2\text{-}CH_2\text{-}NH_2$,
$[(C_{17}H_{35}O\text{-}(CH_2\text{-}CH_2O)_v]_x(CH_3)_{(3-x)}Si\text{-}CH_2\text{-}CH_2\text{-}CH_2\text{-}NH_2$,
$[(C_{18}H_{37}O\text{-}(CH_2\text{-}CH_2O)_v]_x(CH_3)_{(3-x)}Si\text{-}CH_2\text{-}CH_2\text{-}CH_2\text{-}NH_2$.

The product of the process may comprise more than 30 mol%, preferably more than 50 mol%, more preferably more than 75 mol%, very preferably more than 80 mol%, determined by $^{13}C$ NMR, of silicon-containing azodicarboxamides of the general formula I.

The product of the process may comprise less than 50 mol%, preferably less than 25 mol%, more preferably less than 15 mol%, very preferably less than 10 mol%, of secondary constituents of the general formula II, determined by $^{13}C$ NMR.

The product of the process may comprise less than 50 mol%, preferably less than 25 mol%, more preferably less than 15 mol%, very preferably less than 10 mol%, of secondary constituents of the general formula III and IV, determined by $^{13}C$ NMR.

The amount in relative mol% of the compounds of the general formula II in the products is determined by the ratio of the integrals of the carbonyl C atoms in the $^{13}C$ NMR of the compounds of the general formula II and I.

Relative mol% of compounds of the formula II = (integral of all -($\underline{C}$=O) atoms in the formula II)/(integral of all -($\underline{C}$=O) atoms in the formula II) + (integral of all -($\underline{C}$=O) atoms in formula I)).

The product of the process may comprise compounds of the general formula IV, V, VI and VII

$Sub^1\text{-}X^1\text{-}C(O)\text{-}NH\text{-}NH\text{-}C(O)\text{-}X^2\text{-}Sub^2$ (IV)

$(A^1)_x(A^2)_{(3-x)}Si\text{-}R^1\text{-}N(D^1)\text{-}CO\text{-}NH\text{-}NH\text{-}CO\text{-}N(D^1)\text{-}R^1\text{-}Si(A^1)_x(A^2)_{(3-x)}$ (V)

$(A^1)_x(A^2)_{(3-x)}Si\text{-}R^1\text{-}NH\text{-}CO\text{-}NH\text{-}NH\text{-}CO\text{-}X^2\text{-}Sub^2$ (VI)

$(A^1)_x(A^2)_{(3-x)}Si\text{-}R^1\text{-}NH\text{-}CO\text{-}NH\text{-}NH\text{-}CO\text{-}X^1\text{-}Sub^1$ (VII).

The relative mol% of the compounds of the general formulae III and IV in the products are determined by integration and by the ratio of the N-adjacent C atoms ($NH_2\text{-}\underline{C}H_2$-) in the $^{13}C$ NMR against the mol% of the compounds of the general formula I of the N-adjacent C atoms (-(C=O)-$\overline{N}H\text{-}CH_2$-).

Relative mol% of compounds of the formulae III = (integral of all C atoms of $R^I$ in the formulae III adjacent to N) / ((integral of all C atoms of $R^I$ in the formulae III adjacent to N) + (integral of all C atoms of $R^I$ in the formula I adjacent to N)).

The process may be carried out in solvents or solvent-free.

In relation to the compounds of the general formula II used, the amount of solvent may be between 1 wt% and 5000 wt%, preferably between 1 wt% and 1000 wt%, more preferably between 50 wt% and 1000 wt%, more preferably between 50 wt% and 500 wt%.

In relation to the compounds of the general formula II used, the amount of solvent may be more than 1 wt%, preferably more than 10 wt%, more preferably more than 50 wt%, more preferably more than 100 wt%.

The solvents used may have a boiling point of -100°C to 250°C, preferably 0-150°C, more preferably 20-100°C.

Solvents used may be alcoholic or non-alcoholic compounds.

Solvents used may be mixtures of alcoholic and/or non-alcoholic compounds.

Non-alcoholic solvents may be halogen-containing or halogen-free solvents.

Non-alcoholic, halogen-containing solvents may preferably be $CCl_4$, $CHCl_3$, $CH_2Cl_2$, $CH_3Cl$, $CCl_3$-$CCl_3$, $CHCl_2$-$CCl_3$, $CHCl_2$-$CHCl_2$ or $CH_2Cl$-$CH_2Cl$.

Non-alcoholic, halogen-free solvents used may preferably be alkanes, ethers, mercaptans, dialkyl sulphides or alkylphosphanes.

Non-alcoholic, halogen-free solvents used may very preferably be alkanes or mixtures of alkanes, such as pentane, hexane, cyclohexane, heptane or octane.

Alcoholic solvents used may be straight-chain, cyclic or branched alcohols.

Alcohols used may also be mixtures of alcohols.

With particular preference it is possible to use alcohols which correspond to the respective alkoxy substituents on the silicon in the compounds of the formulae III.

With very particular preference, methanol, ethanol, cyclohexanol, n-butanol, tert-butanol or isopropanol may be used.

The reaction may be carried out preferably with exclusion of air and of water.

The reaction may be carried out under an inert gas atmosphere, for example under argon or nitrogen, preferably under nitrogen.

The process of the invention can be carried out at atmospheric pressure, elevated pressure or reduced pressure.

Atmospheric pressure and reduced pressure are preferred.

Elevated pressure may be a pressure from 1.1 bar to 100 bar, preferably of 1.5 bar to 50 bar, more preferably of 2 bar to 20 bar and very preferably of 2 to 10 bar.

Reduced pressure may be a pressure of 1 mbar to 1000 mbar, preferably 1 mbar to 500 mbar, more preferably 1 mbar to 250 mbar, very preferably 5 mbar to 100 mbar.

The process may be carried out at temperatures between -100°C and +200°C, preferably between -25 and 150°C, more preferably between -10°C and 100°C, very preferably between -10 and 50°C.

For the process , substances of the general formula II may be metered into substances of the general formula III.

For the process , substances of the general formula III may be metered into substances of the general formula II.

For the process , stabilizers may be added before, during or after the reaction.

Mixtures of stabilizers may be added.

Stabilizers may inhibit or retard the thermally induced decomposition of azo compounds.

Stabilizers may be radical scavengers.

Stabilizers may be chelating agents.

Stabilizers may inhibit or retard the light-induced decomposition of azo compounds.

Stabilizers may be UV stabilizers.

Stabilizers may inhibit or retard oxidation reactions.

Stabilizers may be anionic or cationic compounds.

Stabilizers may comprise heteroatoms such as oxygen, sulphur, nitrogen or phosphorus.

Stabilizers may be carboxylic acids, preferably dicarboxylic or tricarboxylic acids. Preference is given to trimellitic acid (CAS 528-44-9), pyromellitic acid (CAS 89-05-4), phthalic acid, nitrilotriacetic acid (CAS 139-13-9), alpha-hydroxysuccinic acid (CAS 6915-15-7), adipic acid, fumaric acid and maleic acid.

Stabilizers may be carboxylic anhydrides, preferably cyclic carboxylic anhydrides. Particular preference is given to trimellitic anhydride (TMSA, CAS 552-30-7)), pyromellitic dianhydride (CAS 89-32-7), tetrahydro-2,5-furandione (CAS 108-30-5), phthalic anhydride and maleic anhydride.

Stabilizers may be alcohols, preferably di- or trialcohols. Preference is given to hydroquinone, diethanolamine and triethanolamine.

Stabilizers may be benzotriazole (CAS 95-14-7) and derivatives thereof. Preference is given to tolyltriazole (CAS 29385-43-1), 5-butylbenzotriazole (CAS 3663-24-9), 1-(hydroxymethyl)benzotriazole (CAS 28539-02-8).

Benzotriazole derivatives may correspond to those derivatives specified in US 5 441 563, US 5 548 003 and FR 2722205.

Stabilizers may be benzimidazoles and derivatives thereof. Preference is given to 1-hydroxymethylbenzimidazole (CAS 19541-99-2) CAS 13786-58-8, CAS 18249-94-0 and CAS 81247-25-8.

Stabilizers for the compounds of the formula I according to the invention may be substances that are conventional and known as accelerators and activators in the rubber industry.

Stabilizers may be thiocarbamides.

Stabilizers may be preferably 2-mercaptobenzothiazole, dibenzothiazyl disulphide, 2-(morpholinothio)benzothiazole, diisopropylbenzothiazylsulphenamide, N-cyclohexyl-2-benzothiazylsulphenamide, N,N-dicyclohexyl-2-benzothiazylsulphenamide, N-tert-butyl-2-benzothiazylsulphenamide, benzothiazyl-2-sulphene morpholide, N-dicyclohexyl-2-benzothiazylsulphenamide, tetramethylthiuram monosulphide, tetramethylthiuram disulphide, tetraethylthiuram disulphide, tetrabutylthiuram disulphide, tetrabenzylthiuram disulphide, tetraisobutylthiuram disulphide, N,N'-dimethyl-N,N'-diphenylthiuram disulphide, dipentamethylenethiuram disulphide and dipentamethylenethiuram tetra/hexasulphide.

For the process , 0.001 to 100 wt%, preferably 0.01 to 50 wt%, more preferably 0.01 to 10 wt%, very preferably 0.1 to 5 wt%, of stabilizers may be used, based on the mass of the substances of the general formula II employed.

For the process , more than 0.001 wt%, preferably more than 0.01 wt%, more preferably more than 0.1 wt%, very preferably more than 1 wt%, of stabilizers may be employed, based on the mass of the substances of the general formula II employed.

For the process , less than 100 wt%, preferably less than 25 wt%, more preferably less than 10 wt%, very preferably less than 1 wt%, of stabilizers may be employed, based on the mass of the substances of the general formula II employed.

The invention further provides a process for preparing rubber mixtures which is characterized in that at least one rubber selected from the group of ethylene-propylene-diene copolymer (EPDM), ethylene-propylene copolymer (EPM), chloroprene rubber (CR), chloropolyethylene (CM), chloroisobutene-isoprene-(chlorobutyl) rubber (CIIR), chlorosulphonyl polyethylene (CSM), ethylene-vinyl acetate copolymer (EAM), alkyl acrylate copolymer (ACM), polyester polyurethane (AU), polyether polyurethane (EU), bromo-isobutene-isoprene-(bromobutyl) rubber (BIIR), polychlorotrifluoroethylene (CFM), isobuteneisoprene rubber (butyl rubber, IIR), isobutene rubber (IM), polyisoprene (IR), thermoplastic polyeter polyurethane (YAU), thermoplastic polyetherpolyurethane (YEU), silicone rubber with methyl groups on the polymer chain (MQ), hydrogenated acrylonitrile-butadiene rubber (HNBR), acrylonitrile-butadiene rubber (NBR) or carboxylated acrylonitrile-butadiene rubber (XNBR), preferably ethylene-propylene-diene copolymer (EPDM), at least one filler and at least one silicon-containing azodicarboxamide according to the invention are mixed.

The invention additionally provides rubber mixtures which are characterized in that they comprise

(a) at least one rubber, selected from the group of ethylene-propylene-diene copolymer (EPDM), ethylene-propylene copolymer (EPM), chloroprene rubber (CR), chloropolyethylene (CM), chloroisobutene- isoprene (chlorobutyl) rubber (CIIR), chlorosulfonyl polyethylene (CSM), ethylene-vinyl acetate copolymer (EAM), alkyl acrylate copolymer (ACM), polyester polyurethane (AU), polyether polyurethane (EU), bromo-isobutene-isoprene (bromobutyl)rubber (BIIR), polychlorotrifluoroethylene (CFM), isobuteneisoprene rubber (butyl rubber, IIR), isobutene rubber (IM), polyisoprene (IR), thermoplastic polyester polyurethane (YAU), thermoplastic polyether polyurethane (YEU), silicone rubber with methyl groups on the polymer chain (MQ), hydrogenated acrylonitrile-butadiene rubber (HNBR), acrylonitrile-butadiene rubber (NBR) or carboxylated acrylonitrile-butadiene rubber (XNBR), preferably ethylene-propylene-diene copolymer (EPDM),

(b) at least one filler and

(c) silicon-containing azodicarboxamides according to the invention.

The prefered rubber for preparation of the inventive rubber mixtures is ethylene-propylene-diene copolymer (EPDM) which can contain a third monomer (ethylenepropylene-terpolymer).

The inventive rubber mixtures can contain additionally natural rubber or synthetic rubbers. Preferred synthetic rubbers are described, for example, in W. Hofmann, Kautschuktechnologie [Rubber Technology], Genter Verlag, Stuttgart

1980. They include, among others,

- polybutadiene (BR);
- styrene/butadiene copolymers (SBR), for example emulsion-SBR (E-SBR) or solution-SBR (S-SBR). The styrene/butadiene copolymers may have a styrene content of 1 to 60 wt%, preferably 2 to 50 wt%, more preferably 10 to 40 wt%, very preferably 15 to 35 wt%;
- chloroprene (CR);
- isoprene rubber (IR);
- isobutylene/isoprene copolymers (butyl-IIR);
- styrene/isoprene copolymers (SIR);
- butadiene/isoprene copolymers (BIR);
- styrene/butadiene/isoprene copolymers (SBIR);
- butadiene/acrylonitrile copolymers having acrylonitrile contents of 5 to 60, preferably 10 to 50 wt% (NBR), more preferably 10 to 45 wt% (NBR), very preferably 19 to 45 wt% (NBR);
- partly hydrogenated or fully hydrogenated NBR rubber (HNBR);
- ethylene/propylene/diene copolymers (EPDM);
- aforementioned rubbers further possessing functional groups, such as carboxy, silanol or epoxy groups, for example, examples being epoxidized NR, carboxy-functionalized NBR or silanol- (-SiOH) and/or silylalkoxy-functionalized (-Si-OR) SBR;

and mixtures of these rubbers.

The rubber mixture may comprise as its rubber a mixture of natural rubber and/or isoprene rubbers with other diene rubbers.

The isoprene rubber used may preferably be of the 1,4 type. A high level of cis-1,4 bonds may be preferable, typically at more than 90 mol%, more preferably at more than 95 mol%, very preferably more than 98 mol%.

Fillers used for the rubber mixtures may be as follows:

- carbon blacks, for example lamp black, furnace black, gas black or thermal black. The carbon blacks may have a BET surface area of 20 to 200 $m^2/g$. The carbon blacks may optionally also include heteroatoms, such as Si, for example. The carbon blacks may be partly oxidized and may comprise (-OH) groups or (-COOH) groups.
- Amorphous silicas, produced for example by precipitating solutions of silicates (precipitated silicas) or by flame hydrolysis of silicon halides (pyrogenic or fumed silicas). The precipitated and fumed silicas may have a specific surface area of 5 to 1000 $m^2/g$, preferably 20 to 400 $m^2/g$ (BET surface area). The precipitated and fumed silicas may have a specific surface area of 5 to 1000 $m^2/g$, preferably 20 to 400 $m^2/g$ (BET surface area) and a particle size distribution, measurable by sieving, of 0.1 to 1000 $\mu m$, preferably 0.1 to 500 $\mu m$. The precipitated and fumed silicas may have a Gaussian distribution with regard to their particle size distribution. The silicas may optionally also take the form of mixed oxides with other metal oxides, such as Al, Mg, Ca, Ba, Zn and titanium oxides.
- Synthetic silicates, such as aluminium silicate or alkaline earth metal silicates, for example magnesium silicate or calcium silicate. The synthetic silicates may have a BET surface area of 20 to 400 $m^2/g$ and a primary particle diameter of 10 to 400 nm.
- Synthetic or natural aluminium oxides and aluminium hydroxides.
- Natural silicates, such as kaolin and other naturally occurring silicas.

- Carbonates, preferably calcium carbonate.

- Glass fibres and glass-fibre products (mats, strands) or glass microbeads.

With preference it is possible to use amorphous silicas produced by precipitating solutions of silicates (precipitated silicas), having BET surface areas of 20 to 400 $m^2/g$, preferably 50 to 300 $m^2/g$, more preferably 80 to 220 $m^2/g$, and fumed silicas having BET surface areas of 20 to 400 $m^2/g$, preferably 50 to 300 $m^2/g$, more preferably 80 to 220 $m^2/g$. The precipitated silicas and fumed silicas may be used in amounts of 1 to 300 parts by weight, preferably 5 to 200 parts by weight, more preferably 5 to 150 parts by weight, based in each case on 100 parts of rubber (phr).
Amorphous silicas may be, for example, Ultrasils or Sipernats from Evonik Industries AG, or Zeosils from Rhodia.
Fumed silicas may be, for example, Aerosil products from Evonik Industries AG, Cabosils from Cabot or HDK silicas from Wacker.
The fillers mentioned can be used alone or in a mixture.
In one preferred version, the rubber mixtures may comprise 10 to 150 parts by weight of oxidic or silicatic fillers, optionally together with 0 to 100 parts by weight of carbon black, and also 1 to 50, preferably 2 to 30, more preferably 3 to 20 parts by weight of the silicon-containing azodicarboxamides of the general formula I according to the invention, based in each case on 100 parts by weight of rubber.
The rubber mixtures may comprise further rubber auxiliaries, such as reaction accelerators, ageing inhibitors, heat stabilizers, light stabilizers, antiozonants, processing auxiliaries, plasticizers, tackifiers, blowing agents, dyes, pigments, waxes, extenders, organic acids, retardants, metal oxides and also activators, such as triethanolamine or hexanetriol, for example.
Further rubber auxiliaries may be as follows:

Polyethylene glycol and/or polypropylene glycol and/or polybutylene glycol with molar weights of between 50 and 50 000 g/mol, preferably between 50 and 20 000 g/mol, more preferably between 200 and 10 000 g/mol, very preferably between 400 and 6000 g/mol, extremely preferably between 500 and 3000 g/mol,

hydrocarbon-terminated polyethylene glycol Alk''-O-$(CH_2\text{-}CH_2\text{-}O)_{yI}$-H or Alk''-$(CH_2\text{-}CH_2\text{-}O)_{yI}$-Alk'',

hydrocarbon-terminated polypropylene glycol Alk''-O-$(CH_2\text{-}CH(CH_3)\text{-}O)_{yI}$-H or Alk''-O-$(CH_2\text{-}CH(CH_3)\text{-}O)_{yI}$-Alk'', hydrocarbon-terminated polybutylene glycol Alk''-O-$(CH_2\text{-}CH_2\text{-}CH_2\text{-}CH_2\text{-}O)_{yI}$-H, Alk''-O-$(CH_2\text{-}CH(CH_3)\text{-}CH_2\text{-}O)_{yI}$-H, Alk''-O-$(CH_2\text{-}CH_2\text{-}CH_2\text{-}CH_2\text{-}O)_{yI}$-Alk'' or Alk''-O-$(CH_2\text{-}CH(CH_3)\text{-}CH_2\text{-}O)_{yI}$-Alk'',

where $y^I$ is on average 2-25, preferably $y^I$ is on average 2-15, more preferably $y^I$ is on average 3-8 and 10-14, very preferably $y^I$ is on average 3-6 and 10-13, and Alk'' is a branched or unbranched, unsubstituted or substituted, saturated or unsaturated monovalent hydrocarbon having 1 to 35, preferably 4 to 25, more preferably 6 to 20, very preferably 10 to 20, extremely preferably 11 to 14, carbon atoms,

polyethylene glycol-etherified, polypropylene glycol-etherified or polybutylene glycol-etherified (or each of the following etherified with mixtures thereof) neopentyl glycol $HO\text{-}CH_2\text{-}C(Me)_2\text{-}CH_2\text{-}OH$, pentaerythritol $C(CH_2\text{-}OH)_4$ or trimethylolpropane $CH_3\text{-}CH_2\text{-}C(CH_2\text{-}OH)_3$, where the repeating units of ethylene glycol, propylene glycol and/or butylene glycol in the etherified polyalcohols may be between 2 and 100, preferably between 2 and 50, more preferably between 3 and 30, very preferably between 3 and 15.

For calculating the average value of $y^I$ it is possible to form a ratio of the analytically determinable amount of polyalkylene glycol units to the analytically determinable amount of -Alk'' [(amount of polyalkylene glycol units)/(amount of -Alk'')]. The amounts may be determined using, for example, $^1H$ and $^{13}C$ nuclear magnetic resonance spectroscopy.
The rubber auxiliaries may be used in known amounts, these amounts being determined by factors including the intended use. Customary amounts of each processing auxiliary employed may be amounts of 0.001 to 50 wt%, preferably 0.001 to 30 wt%, more preferably 0.01 to 30 wt%, very preferably 0.1 to 30 wt%, based on rubber (phr) .
The rubber mixtures may be sulphur-vulcanizable rubber mixtures.
The rubber mixtures may be peroxidically crosslinkable rubber mixtures.
Crosslinkers used may be sulphur itself or sulphur donors. The sulphur may be used in amounts of 0.1 to 10 wt%, preferably 0.1 to 5 wt%, based on rubber.
Accelerators used may be 2-mercaptobenzothiazole, dibenzothiazyl disulphide, zinc mercaptobenzothiazole, 2-(morpholinothio)benzothiazole, diisopropylbenzothiazylsulpheneamide, N-cyclohexyl-2-benzothiazylsulpheneamide, N,N-dicyclohexyl-2-benzothiazylsulpheneamide, N-tert-butyl-2-benzothiazylsulpheneamide, benzothiazyl-2-sulphene morpholide, N-dicyclohexyl-2-benzothiazylsulphenamide, tetramethylthiuram monosulphide, tetramethylthiuram disulphide, tetraethylthiuram disulphide, tetrabutylthiuram disulphide, tetrabenzylthiuram disulphide, tetraisobutylthiuram disulphide, N,N'-dimethyl-N,N'-diphenylthiuram disulphide, dipentamethylenethiuram disulphide, dipentamethylenethiuram tetra/hexasulphide, N,N'-ethylthiourea, N,N'-diethylthiourea, N,N'-diphenylthiourea, N'-(3,4-dichlorophenyl)-N,N'-dimethylthiourea, N,N'-dibutylthiourea, N,N,N'-tributylthiourea, zinc dimethyldithiocarbamate, zinc diethyldithiocarbamate, zinc dibutyldithiocarbamate, zinc diisobutyldithiocarbamate, zinc dibenzyldithiocarbamate, zinc ethylphenyldithiocarbamate, zinc pentamethylenedithiocarbamate, zinc diisononyldithiocarbamate, zinc diamyldithiocarbamate, tellurium diethyldithiocarbamate, copper dimethyldithiocarbamate, copper dibutyldithiocarbamate, bismuth dimethyldithiocarbamate, cadmium diethyldithiocarbamate, selenium diethyldithiocarbamate, piperidinepentamethylenedithiocarbamate, nickel dimethyldithiocarbamate, nickel diethyldithiocarbamate, nickel dibutyldithiocarbamate, nickel diisobutyldithiocarbamate, nickel dibenzyldithiocarbamate, lead diamyldithiocarbamate, sodium dimethyldithiocarbamate, sodium diethyldithiocarbamate, sodium dibutyldithiocarbamate, sodium diisobutyldithiocarbamate or sodium dibenzyldithiocarbamate.

Secondary accelerators used may be diphenylguanidine, di-o-tolylguanidine, o-tolylbiguanidine, N,N'-diphenylguanidine, hexamethylenetetramine, condensation products of homologous acroleins with aromatic bases, or condensation products of aldehydes with amines.

The silicon-containing azodicarboxamides of the general formula I may be used as adhesion promoters between inorganic materials, for example glass beads, glass fragments, glass surfaces, glass fibres, metal surfaces, oxidic fillers, for example silicas, and organic polymers, for example thermosets, thermoplastics or elastomers, and as crosslinking agents and surface modifiers for oxidic surfaces.

The silicon-containing azodicarboxamides of the general formula I may be used as coupling reagents in filled rubber mixtures, examples being industrial rubber articles such as damping elements, for example, or in footwear soles.

The addition of the silicon-containing azodicarboxamides of the general formula I, and also the addition of the fillers and additives in the mixing operation, may take place at batch temperatures of 50 to 200°C, preferably 70 to 180°C, more preferably 90 to 160°C. The addition of the silicon-containing azodicarboxamides of the general formula I may be made before, during or after the metering of additional rubber auxiliaries.

The mixing of the rubbers with the filler, optionally rubber auxiliaries and the silicon-containing azodicarboxamides of the general formula I may be carried out in known mixing assemblies, such as rolls, internal mixers and mixing extruders.

The vulcanization of the rubber mixtures may take place at temperatures of 90 to 230°C, preferably 110 to 210°C, more preferably 120 to 190°C, optionally under pressure of 10 to 200 bar.

The rubber mixtures may be used for producing shaped articles, as for example for producing cable sheathing, hoses, drive belts, conveyor belts, roll coverings, footwear soles, ring seals or damping elements.

Examples:

The compounds $(C_{13}H_{27}(-O-CH_2-CH_2)_5-O-)_x(EtO)_{3-x}$ $Si-(CH_2)_3-NH_2$ are prepared by transesterification of $(EtO)_3$ $Si-(CH_2)_3-NH_2$ with $C_{13}H_{27}(-O-CH_2-CH_2)_5-OH$ in analogy to the description in EP 0085831 or DE 3203688 and EP 1683801, with no absolute need for a catalyst.

Raw materials used for the examples are as follows: diisopropyl azodicarboxylate from Novasep, 3-aminopropyl(triethoxysilane) from Evonik Industries AG, Marlosol TA 3050 (ethoxylated isotridecanol) from Sasol.

Pentane from VWR is used as solvent.

Comparative Example 1

Preparation of $[(C_{13}H_{27}(-O-CH_2-CH_2)_5-O-)_{1.0}(EtO)_{2.0}Si-(CH_2)_3-NH-C(=O)-N=]_2$

In a flask, under an argon atmosphere, $[(C_{13}H_{27}(-O-CH_2-CH_2)_5-O-)_{1.0}(EtO)_{2.0}Si-(CH_2)_3-NH_2$ (286 g) in pentane (300 ml) is introduced at -3°C and stirred. Added dropwise to this mixture over the course of 15 minutes is diisopropyl azodicarboxylate (48.5 g) at -5 to +5°C. The cooling bath is then removed and the solution is stirred for 180 minutes, during which the mixture warms up to room temperature. All volatile constituents (pentane, isopropanol) are removed subsequently under a pressure of down to 0.2 mbar. The product is isolated as a clear, red oil (307 g).

The method reported above produces w% ($SiO_2$) = 9.4% and thus a calculated x = 1.0.

Comparative Example 2

Preparation of $[(C_{13}H_{27}(-O-CH_2-CH_2)_5-O-)_{2.0}(EtO)_{1.0}Si-(CH_2)_3-NH-C(=O)-N=]_2$

In a flask, under an argon atmosphere, $[(C_{13}H_{27}(-O-CH_2-CH_2)_5-O-)_{2.0}(EtO)_{1.0}Si-(CH_2)_3-NH_2$ (251 g) in pentane

(300 ml) is introduced at 0°C and stirred. Added dropwise to this mixture over the course of 15 minutes is diisopropyl azodicarboxylate (26.1 g) at -5 to +5°C. The cooling bath is then removed and the solution is stirred for 180 minutes, during which the mixture warms up to room temperature. All volatile constituents (pentane, isopropanol) are removed subsequently under a pressure of down to 0.2 mbar. The product is isolated as a clear, red oil (322 g).

The method reported above produces w% ($SiO_2$) = 5.9% and thus a calculated x = 2.0.

Inventive Example 1

Preparation of $[(C_{13}H_{27}(-O-CH_2-CH_2)_5-O-)_{1.3}(EtO)_{1.7}Si-(CH_2)_3-NH-C(=O)-N=]_2$

In a flask, under an argon atmosphere, $[(C_{13}H_{27}(-O-CH_2-CH_2)_5-O-)_{1.3}(EtO)_{1.7}Si-(CH_2)_3-NH_2$ (246 g) in pentane (300 ml) is introduced at 0°C and stirred. Added dropwise to this mixture over the course of 15 minutes is diisopropyl azodicarboxylate (35.1 g) at -5 to +8°C. The cooling bath is then removed and the solution is stirred for 180 minutes, during which the mixture warms up to room temperature. All volatile constituents (pentane, isopropanol) are removed subsequently under a pressure of down to 0.2 mbar. The product is isolated as a clear, red oil (262 g).

The method reported above produces w% ($SiO_2$) = 8.0% and thus a calculated x = 1.3.

Inventive Example 2

Preparation of $[(C_{13}H_{27}(-O-CH_2-CH_2)_5-O-)_{1.5}(EtO)_{1.5}Si-(CH_2)_3-NH-C(=O)-N=]_2$

In a flask, under an argon atmosphere, $[(C_{13}H_{27}(-O-CH_2-CH_2)_5-O-)_{1.5}(EtO)_{1.5}Si-(CH_2)_3-NH_2$ (276 g) in pentane (300 ml) is introduced at 0°C and stirred. Added dropwise to this mixture over the course of 10 minutes is diisopropyl azodicarboxylate (35.9 g) at -5 to +5°C. The cooling bath is then removed and the solution is stirred for 180 minutes, during which the mixture warms up to room temperature. All volatile constituents (pentane, isopropanol) are removed subsequently under a pressure of down to 0.2 mbar. The product is isolated as a clear, red oil (291 g).

The method reported above produces w% ($SiO_2$) = 7.3% and thus a calculated x = 1.5.

Inventive Example 3

Preparation of $[(C_{13}H_{27}(-O-CH_2-CH_2)_5-O-)_{1.7}(EtO)_{1.3}Si-(CH_2)_3-NH-C(=O)-N=]_2$

In a flask, under an argon atmosphere, $[(C_{13}H_{27}(-O-CH_2-CH_2)_5-O-)_{1.7}(EtO)_{1.3}Si-(CH_2)_3-NH_2$ (305 g) in pentane (300 ml) is introduced at 0°C and stirred. Added dropwise to this mixture over the course of 15 minutes is diisopropyl azodicarboxylate (40.0 g) at -5 to +5°C. The cooling bath is then removed and the solution is stirred for 180 minutes, during which the mixture warms up to room temperature. All volatile constituents (pentane, isopropanol) are removed subsequently under a pressure of down to 0.2 mbar. The product is isolated as a clear, red oil (263 g).

The method reported above produces w% ($SiO_2$) = 6.6% and thus a calculated x = 1.7.

Example 4: Rubber mixtures

The formulation used for the rubber mixtures is specified in Table 1 below. The unit phr means parts by weight based on 100 parts of the raw rubber used. The silanes are metered equimolarly, in other words with the same amount of substance. The general process for preparing rubber mixtures and vulcanizates thereof is described in the book: "Rubber Technology Handbook", W. Hofmann, Hanser Verlag 1994.

Table 1

| Substance | Mixture 1 Reference [phr] | Mixture 2 Reference [phr] | Mixture 3 [phr] | Mixture 4 [phr] | Mixture 5 [phr] | Mixture 6 Reference [phr] |
|---|---|---|---|---|---|---|
| **1st Stage** | | | | | | |
| BUNA® EP G 5455 | 150 | 150 | 150 | 150 | 150 | 150 |
| Ultrasil® 7000 GR | - | 150 | 150 | 150 | 150 | 150 |
| Corax® N 550 | 130 | | - | - | - | - |
| Comparative Example 1 | - | 12.9 | - | - | - | - |

(continued)

| Substance | Mixture 1 Reference [phr] | Mixture 2 Reference [phr] | Mixture 3 [phr] | Mixture 4 [phr] | Mixture 5 [phr] | Mixture 6 Reference [phr] |
|---|---|---|---|---|---|---|
| **1st Stage** | | | | | | |
| Inventive Example 1 | - | - | 15.2 | - | - | - |
| Inventive Example 2 | - | - | - | 16.7 | - | - |
| Inventive Example 3 | - | - | - | - | 18.2 | - |
| Comparative Example 2 | - | - | - | - | - | 20.5 |
| Stearic acid | 2 | 2 | 2 | 2 | 2 | 2 |
| Lipoxol 4000 | 2 | 2 | 2 | 2 | 2 | 2 |
| Sunpar 150 | 50 | 50 | 50 | 50 | 50 | 50 |
| **3rd Stage** | | | | | | |
| Stage 2 batch | | | | | | |
| Perkacit TBzTD | 1.2 | 1.2 | 1.2 | 1.2 | 1.2 | 1.2 |
| Rhenocure TP/S | 2.0 | 2.0 | 2.0 | 2.0 | 2.0 | 2.0 |
| ZnO | 5.0 | 5.0 | 5.0 | 5.0 | 5.0 | 5.0 |
| Sulphur | 1.5 | 1.5 | 1.5 | 1.5 | 1.5 | 1.5 |
| Vulkacit Mercapto C | 1.0 | 1.0 | 1.0 | 1.0 | 1.0 | 1.0 |

The polymer Buna® EP G 5455 is an ethylene-propylene-5 terpolymer with an average unsaturation (ENB content) = 4.3, containing 50 phr of paraffinic oil, from Lanxess. The Mooney viscosity (UML (1+4) 125°C) is 46.

Ultrasil 7000 GR is a readily dispersible silica from Evonik Industries AG and has a BET surface area of 170 $m^2/g$.

Lipoxol 4000 from Sasol is a polyethylene glycol 4000.

Sunpar 150 from Holly Corporation is a paraffinic oil.

Vulkacit Mercapto C from Lanxess is 2-mercaptobenzothiazole (MBT). Perkacit TBzTD (tetrabenzylthiuram tetrasulphide) is a product from Flexsys N.V.; Rhenocure TP/S is from RheinChemie and is 67% zinc dialkyldithiophosphate bound on 33% silica.

The rubber mixtures are produced in an internal mixer according to the mixing method in Table 2.

Table 2:

| | Stage 1 |
|---|---|
| Settings | |
| Mixing unit | GK 1.5 E |
| Speed | 70 $min^{-1}$ |
| Ram pressure | 5.5 bar |
| Capacity | 1.58 L |
| Fill level | 0.65 |
| Flow temp. | 70°C |
| Mixing process | |
| 0.0 to 0.5 min | polymer |
| 0.5 to 1.0 min | 1/2 silica or carbon black, silanes |
| 1.0 to 1.0 min | deaerate and purify |
| 1.0 to 2.0 min | 1/2 silica or carbon black, stearic acid, Lipoxol 4000, Sunpar 150 |
| 2.0 to 2.0 min | deaerate and purify |
| 2.0 to 3.0 min | mix at 150°C |
| 3.0 to 3.0 min | deaerate |
| 3.0 to 5.0 min | mix at 150°C by adapting the speed discharge and 45 s on roll (6 mm roll nip), discharge |
| Batch temp. | 145-155°C |

(continued)

| | |
|---|---|
| Mixing process | |
| Storage | 24 h / RT |
| | Stage 2 |
| Settings | |
| Mixing unit<br>Speed<br>Ram pressure<br>Capacity<br>Fill level<br>Flow temp. | GK 1.5 E<br>70 $min^{-1}$<br>5.5 bar<br>1.58 L<br>0.62<br>70°C |
| Mixing process | |
| 0.0 to 1.0 min<br>1.0 to 3.0 min<br><br>3.0 to 3.0 min<br><br>Batch temp.<br>Storage | stage 1 batch<br>mix at 150°C by adapting speed<br><br>mix at 150°C by adapting speed<br>discharge and 45 s on roll (6 mm roll nip), discharge<br>145-155°C<br>4-24 h / RT |
| | Stage 3 |
| Settings | |
| Mixing unit<br>Speed<br>Ram pressure<br>Capacity<br>Fill level<br>Flow temp. | GK 1.5 E<br>50 $min^{-1}$<br>5.5 bar<br>1.58 L<br>0.59<br>70°C |
| Mixing process | |
| 0.0 to 2.0 min<br>2.0 to 2.0 min<br>2.0 to 2.0 min<br><br>Batch temp.<br>Storage | Batch stage 2 and accelerator and sulphur<br>discharge and 20 s on roll (6 mm roll nip)<br>cut in 3 left and 3 right with roll nip 3 mm<br>and pass 3 through 3 mm roll nip<br>90-110°C<br>12 h / RT |

Table 3 summarizes the methods for rubber testing.

Table 3

| Physical testing | Standard/conditions |
|---|---|
| vulcameter testing, 155°C Delta torque (dNm)<br>tensile test on ring specimen, 23°C | DIN 53529/3, ISO6502<br>DIN 53504, ISO 37 |
| Shore A hardness, 23°C (SH) | DIN 53 505 |
| Tear resistance DIE A 23°C | ASTM D 624 |

Table 4 shows the results of technical rubber testing. Vulcanization takes place at 155°C for 30 minutes.

Table 4

| | Mixture 1 Reference | Mixture 2 Reference | Mixture 3 | Mixture 4 | Mixture 5 | Mixture 6 Reference |
|---|---|---|---|---|---|---|
| *MDR: 155 °C;* 0.5° Delta torque dNm | 12.1 | 15.1 | 17.0 | 16.0 | 17.3 | 16.5 |
| | | | | | | |
| 100% Modulus MPa | 2.2 | 1.2 | 1.2 | 1.2 | 1.2 | 1.1 |
| 300% Modulus MPa | 8.3 | 4.6 | 5.5 | 5.0 | 5.1 | 4.9 |
| Shore A hardness SH | 57 | 66 | 65 | 66 | 64 | 64 |
| Tear resistance DIE A N/mm | 45 | 62 | 72 | 73 | 69 | 65 |

As can be seen from Table 4, the inventive mixtures 3, 4 and 5 with the silanes of the invention display advantages relative to the mixtures 1, 2 and 6 (comparative mixtures). In the case of equimolar metering, a distinct improvement in the modulus 300, delta torque and tear resistance is observed relative to rubber mixtures comprising silanes with average polyether fractions less than and greater than the claimed range.

## Claims

1. Silicon-containing azodicarboxamides of the formula $[(C_{13}H_{27}(-O-CH_2-CH_2)_5-O-)_{1.5}(EtO)_{1.5}Si-(CH_2)_3-NH-C(=O)-N=]_2$, $[(C_{13}H_{27}(-O-CH_2-CH_2)_5-O-)_{1.3}(EtO)_{1.7}Si-(CH_2)_3-NH-C(=O)-N=]_2$, $[(C_{13}H_{27}(-O-CH_2-CH_2)_5-O-)_{1.4}(EtO)_{1.6}Si-(CH_2)_3-NH-C(=O)-N=]_2$, $[(C_{13}H_{27}(-O-CH_2-CH_2)_5-O-)_{1.7}(EtO)_{1.3}Si-(CH_2)_3-NH-C(=O)-N=]_2$ or $[(C_{13}H_{27}(-O-CH_2-CH_2)_5-O-)_{1.6}(EtO)_{1.4}Si-(CH_2)_3-NH-C(=O)-N=]_2$.

2. Process for preparing rubber mixtures, **characterized in that** at least one rubber, selected from the groupof ethylene-propylene-diene copolymer (EPDM), ethylene-propylene copolymer (EPM), chloroprene rubber (CR), chloropolyethylene (CM), chloroisobutene- isoprene (chlorobutyl) rubber (CIIR), chlorosulfonyl polyethylene (CSM), ethylenevinyl acetate copolymer (EAM), alkyl acrylate copolymer (ACM), polyester polyurethane (AU), polyether polyurethane (EU), bromo-isobuteneisoprene (bromobutyl)rubber (BIIR), polychlorotrifluoroethylene (CFM), isobuteneisoprene rubber (butyl rubber, IIR), isobutene rubber (IM), polyisoprene (IR), thermoplastic polyester polyurethane (YAU), thermoplastic polyether polyurethane (YEU), silicone rubber with methyl groups on the polymer chain (MQ), hydrogenated acrylonitrile-butadiene rubber (HNBR), acrylonitrile-butadiene rubber (NBR) or carboxylated acrylonitrile-butadiene rubber (XNBR), preferably ethylene-propylene-diene copolymer (EPDM),
at least one filler and
at least one silicon-containing azodicarboxamide according to Claim 1 are mixed.

3. Rubber mixture **characterized in that** it comprises

   (a) at least one rubber, selected from the group of ethylene-propylene-diene copolymer (EPDM), ethylene-propylene copolymer (EPM), chloroprene rubber (CR), chloropolyethylene (CM), chloroisobutene- isoprene (chlorobutyl) rubber (CIIR), chlorosulfonyl polyethylene (CSM), ethylenevinyl acetate copolymer (EAM), alkyl acrylate copolymer (ACM), polyester polyurethane (AU), polyether polyurethane (EU), bromo-isobuteneisoprene (bromobutyl)rubber (BIIR), polychlorotrifluoroethylene (CFM), isobuteneisoprene rubber (butyl rubber, IIR), isobutene rubber (IM), polyisoprene (IR), thermoplastic polyester polyurethane (YAU), thermoplastic polyether polyurethane (YEU), silicone rubber with methyl groups on the polymer chain (MQ), hydrogenated acrylonitrile-butadiene rubber (HNBR), acrylonitrile-butadiene rubber (NBR) or carboxylated acrylonitrile-butadiene rubber (XNBR), preferably ethylene-propylene-diene copolymer (EPDM),
   (b) at least one filler and
   (c) silicon-containing azodicarboxamides according to Claim 1.

4. Use of the rubber mixture according to Claim 3 in cable sheathing, hoses, drive belts, conveyor belts, roll coverings, footwear soles, ring seals and damping elements.

## Patentansprüche

1. Siliciumhaltige Azodicarboxamide der Formel $[(C_{13}H_{27}(\text{-O-}CH_2\text{-}CH_2)_5\text{-O-})_{1,5}(EtO)_{1,5}Si\text{-}(CH_2)_3\text{-NH-C(=O)-N=}]_2$, $[(C_{13}H_{27}(\text{-O-}CH_2\text{-}CH_2)_5\text{-O-})_{1,3}(EtO)_{1,7}Si\text{-}(CH_2)_3\text{-NH-C(=O)-N=}]_2$, $[(C_{13}H_{27}(\text{-O-}CH_2\text{-}CH_2)_5\text{-O-})_{1,4}(EtO)_{1,6}Si\text{-}(CH_2)_3\text{-NH-C(=O)-N=}]_2$, $[(C_{13}H_{27}(\text{-O-}CH_2\text{-}CH_2)_5\text{-O-})_{1,7}(EtO)_{1,3}Si\text{-}(CH_2)_3\text{-NH-C(=O)-N=}]_2$ oder $[(C_{13}H_{27}(\text{-O-}CH_2\text{-}CH_2)_5\text{-O-})_{1,6}(EtO)_{1,4}Si\text{-}(CH_2)_3\text{-NH-C(=O)-N=}]_2$.

2. Verfahren zur Herstellung von Kautschukmischungen, **dadurch gekennzeichnet, dass** man mindestens einen Kautschuk, ausgewählt aus der Gruppe von Ethylen-Propylen-Dien-Copolymer (EPDM), Ethylen-Propylen-Copolymer (EPM), Chloroprenkautschuk (CR), Chlorpolyethylen (CM), Chlor-Isobuten-Isopren-(Chlorbutyl)-Kautschuk (CIIR), Chlorsulfonylpolyethylen (CSM), Ethylen-Vinylacetat-Copolymer (EAM), Alkylacrylat-Copolymer (ACM), Polyesterpolyurethan (AU), Polyetherpolyurethan (EU), Brom-Isobuten-Isopren(Brombutyl)-Kautschuk (BIIR), Polychlortrifluorethylen (CFM), Isobuten-Isopren-Kautschuk (Butylkautschuk, IIR), Isobutenkautschuk (IM), Polyisopren (IR), thermoplastischem Polyesterpolyurethan (YAU), thermoplastischem Polyetherpolyurethan (YEU), Silikonkautschuk mit Methylgruppen an der Polymerkette (MQ), hydriertem Acrylnitril-Butadien-Kautschuk (HNBR), Acrylnitril-Butadien-Kautschuk (NBR) oder carboxyliertem Acrylnitril-Butadien-Kautschuk (XNBR), vorzugsweise Ethylen-Propylen-Dien-Copolymer (EPDM),
mindestens einen Füllstoff und
mindestens ein siliciumhaltiges Azodicarboxamid gemäß Anspruch 1 mischt.

3. Kautschukmischung, **dadurch gekennzeichnet, dass** sie

   (a) mindestens einen Kautschuk, ausgewählt aus der Gruppe von Ethylen-Propylen-Dien-Copolymer (EPDM), Ethylen-Propylen-Copolymer (EPM), Chloroprenkautschuk (CR), Chlorpolyethylen (CM), Chlor-Isobuten-Isopren(Chlorbutyl)-Kautschuk (CIIR), Chlorsulfonylpolyethylen (CSM), Ethylen-Vinylacetat-Copolymer (EAM), Alkylacrylat-Copolymer (ACM), Polyesterpolyurethan (AU), Polyetherpolyurethan (EU), Brom-Isobuten-Isopren(Brombutyl)-Kautschuk (BIIR), Polychlortrifluorethylen (CFM), Isobuten-Isopren-Kautschuk (Butylkautschuk, IIR), Isobutenkautschuk (IM), Polyisopren (IR), thermoplastischem Polyesterpolyurethan (YAU), thermoplastischem Polyetherpolyurethan (YEU), Silikonkautschuk mit Methylgruppen an der Polymerkette (MQ), hydriertem Acrylnitril-Butadien-Kautschuk (HNBR), Acrylnitril-Butadien-Kautschuk (NBR) oder carboxyliertem Acrylnitril-Butadien-Kautschuk (XNBR), vorzugsweise Ethylen-Propylen-Dien-Copolymer (EPDM),
   (b) mindestens einen Füllstoff und
   (c) siliciumhaltige Azodicarboxamide gemäß Anspruch 1
   umfasst.

4. Verwendung der Kautschukmischung gemäß Anspruch 3 in Kabelmänteln, Schläuchen, Treibriemen, Förderbändern, Walzenbelägen, Schuhsohlen, Dichtungsringen und Dämpfungselementen.

## Revendications

1. Azodicarboxamides contenant du silicium de formule $[(C_{13}H_{27}(\text{-O-}CH_2\text{-}CH_2)_5\text{-O-})_{1,5}(EtO)_{1,5}Si\text{-}(CH_2)_3\text{-NH-C(=O)-N=}]_2$, $[(C_{13}H_{27}(\text{-O-}CH_2\text{-}CH_2)_5\text{-O-})_{1,3}(EtO)_{1,7}Si\text{-}(CH_2)_3\text{-NH-C(=O)-N=}]_2$, $[(C_{13}H_{27}(\text{-O-}CH_2\text{-}CH_2)_5\text{-O-})_{1,4}(EtO)_{1,6}Si\text{-}(CH_2)_3\text{-NH-C(=O)-N=}]_2$, $[(C_{13}H_{27}(\text{-O-}CH_2\text{-}CH_2)_5\text{-O-})_{1,7}(EtO)_{1,3}\ Si\text{-}(CH_2)_3\text{-NH-C(=O)-N=}]_2$ ou $[(C_{13}H_{27}(\text{-O-}CH_2\text{-}CH_2)_5\text{-O-})_{1,6}\ (EtO)_{1,4}Si\text{-}(CH_2)_3\text{-NH-C(=O)-N=}]_2$.

2. Procédé de préparation de mélanges de caoutchouc, **caractérisé en ce qu'**au moins un caoutchouc, choisi dans le groupe des copolymère d'éthylène-propylène-diène (EPDM), copolymère d'éthylène-propylène (EPM), caoutchouc chloroprène (CR), chloropolyéthylène (CM), caoutchouc chloroisobutène-isoprène (chlorobutyle) (CIIR), chlorosulfonyl-polyéthylène (CSM), copolymère d'éthylène-acétate de vinyle (EAM), copolymère d'acrylate d'alkyle (ACM), polyester-polyuréthane (AU), polyéther-polyuréthane (EU), caoutchouc bromo-isobutène-isoprène (bromobutyle) (BIIR), polychlorotrifluoroéthylène (CFM), caoutchouc isobutène-isoprène (caoutchouc butyle, IIR), caoutchouc isobutène (IM), polyisoprène (IR), polyester-polyuréthane thermoplastique (YAU), polyéther-polyuréthane thermoplastique (YEU), caoutchouc silicone avec des groupes méthyle sur la chaîne de polymère (MQ), caoutchouc acrylonitrile-butadiène hydrogéné (HNBR), caoutchouc acrylonitrile-butadiène (NBR) ou caoutchouc acrylonitrile-butadiène carboxylé (XNBR), de préférence un copolymère d'éthylène-propylène-diène (EPDM),
au moins une charge et
au moins un azodicarboxamide contenant du silicium selon la revendication 1 sont mélangés.

**3.** Mélange de caoutchouc **caractérisé en ce qu'**il comprend

(a) au moins un caoutchouc, choisi dans le groupe des copolymère d'éthylène-propylène-diène (EPDM), copolymère d'éthylène-propylène (EPM), caoutchouc chloroprène (CR), chloropolyéthylène (CM), caoutchouc chloroisobutène-isoprène (chlorobutyle) (CIIR), chlorosulfonyl-polyéthylène (CSM), copolymère d'éthylène-acétate de vinyle (EAM), copolymère d'acrylate d'alkyle (ACM), polyester-polyuréthane (AU), polyéther-polyuréthane (EU), caoutchouc bromo-isobutène-isoprène (bromobutyle) (BIIR), polychlorotrifluoroéthylène (CFM), caoutchouc isobutène-isoprène (caoutchouc butyle, IIR), caoutchouc isobutène (IM), polyisoprène (IR), polyester-polyuréthane thermoplastique (YAU), polyéther-polyuréthane thermoplastique (YEU), caoutchouc silicone avec des groupes méthyle sur la chaîne de polymère (MQ), caoutchouc acrylonitrile-butadiène hydrogéné (HNBR), caoutchouc acrylonitrile-butadiène (NBR) ou caoutchouc acrylonitrile-butadiène carboxylé (XNBR), de préférence un copolymère d'éthylène-propylène-diène (EPDM),
(b) au moins une charge et
(c) des azodicarboxamides contenant du silicium selon la revendication 1.

**4.** Utilisation du mélange de caoutchouc selon la revendication 3 dans le gainage de câble, des tuyaux flexibles, des courroies d'entraînement, des courroies de transport, des revêtements de rouleau, des semelles de chaussure, des bagues d'étanchéité et des éléments d'amortissement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 2704506
- US 20090234066 A1
- US 20090186961 A1
- EP 1683801 A
- EP 2508559 A
- EP 2552925 A
- US 5441563 A
- US 5548003 A
- FR 2722205
- EP 0085831 A
- DE 3203688

### Non-patent literature cited in the description

- *CHEMICAL ABSTRACTS,* 528-44-9
- *CHEMICAL ABSTRACTS,* 89-05-4
- *CHEMICAL ABSTRACTS,* 139-13-9
- *CHEMICAL ABSTRACTS,* 6915-15-7
- *CHEMICAL ABSTRACTS,* 552-30-7
- *CHEMICAL ABSTRACTS,* 89-32-7
- *CHEMICAL ABSTRACTS,* 108-30-5
- *CHEMICAL ABSTRACTS,* 95-14-7
- *CHEMICAL ABSTRACTS,* 29385-43-1
- *CHEMICAL ABSTRACTS,* 3663-24-9
- *CHEMICAL ABSTRACTS,* 28539-02-8
- *CHEMICAL ABSTRACTS,* 19541-99-2
- *CHEMICAL ABSTRACTS,* 13786-58-8
- *CHEMICAL ABSTRACTS,* 18249-94-0
- *CHEMICAL ABSTRACTS,* 81247-25-8
- **W. HOFMANN.** Kautschuktechnologie [Rubber Technology. Genter Verlag, 1980
- **W. HOFMANN.** Rubber Technology Handbook. Hanser Verlag, 1994